# EUROPÄISCHE PATENTSCHRIFT

(11) **EP 2 614 330 B1**
(45) Veröffentlichungstag und Bekanntmachung des Hinweises auf die Patenterteilung: **25.03.2015**
(21) Anmeldenummer: 11757593.6
(22) Anmeldetag: 09.09.2011
(51) Int. Cl.: F28D 20/02

(54) **SPEICHERTANKEINRICHTUNG FÜR EIN ENERGIESPEICHERSYSTEM SOWIE ENERGIESPEICHERSYSTEM MIT EINER SPEICHERTANKEINRICHTUNG**
STORAGE TANK DEVICE FOR AN ENERGY STORAGE SYSTEM, AND ENERGY STORAGE SYSTEM HAVING A STORAGE TANK DEVICE
ENSEMBLE RÉSERVOIR DE STOCKAGE POUR UN SYSTÈME D'ACCUMULATION D'ÉNERGIE ET SYSTÈME D'ACCUMULATION D'ÉNERGIE ÉQUIPÉ D'UN ENSEMBLE RÉSERVOIR DE STOCKAGE

(30) Priorität: 10.09.2010 DE 102010037474
(43) Veröffentlichungstag der Anmeldung: 17.07.2013
(73) Patentinhaber: Viessmann Eis-Energiespeicher GmbH, 71636 Ludwigsburg (DE)
(72) Erfinder: VON ROHR, Alexander, 88045 Friedrichshafen (DE)
(74) Vertreter: Kaufmann, Ursula Josefine
(86) Internationale Anmeldenummer: PCT/EP2011/065656
(87) Internationale Veröffentlichungsnummer: WO 2012/032159

(56) Entgegenhaltungen:
- DE-A1- 2 931 485
- DE-A1- 3 004 062
- DE-A1- 3 224 854
- DE-A1-102004 052 447
- DE-A1-102005 059 942
- DE-A1-102007 006 419
- DE-A1-102008 041 715
- DE-C1- 19 807 657
- DE-U1-202006 005 592
- JP-A- 2006 234 310
- US-A- 5 944 089

## Beschreibung

### Stand der Technik

Die Erfindung betrifft eine Speichertankeinrichtung für ein Energiespeichersystem sowie ein Energiespeichersystem mit einer Speichertankeinrichtung und ein Verfahren zum Betreiben eines Energiespeichersystems.

Es sind unterschiedlichste Systeme von Wärmespeichern im Stand der Technik bekannt.

Dokument DE 29 31 485 A1 offenbart ein System, bei dem ein Wärmetauscher in Form eines Verdampfers mit einem Kältemittel als Wärmeträgermedium eingesetzt wird.

Dokument DE 198 07 657 C1 offenbart einen Wärmespeicher mit verschiedenen Temperaturzonen entlang seiner Achse. Ein Wärmetauscher in einem Niedertemperatur-Latentwärmespeicher ist hydraulisch in Serie mit einem Wärmetauscher in einem nachgeschalteten Wasserspeicher geschaltet. Beide Wärmetauscher bilden eine Einheit. Der Wasserspeicher wird auf einer mittleren Temperatur von etwa 20-60°C gehalten, während der Niedertemperatur-Latentwärmespeicher bei einer mittleren Temperatur von etwa 15-25°C gehalten wird.

Dokument DE 32 24 854 A1 offenbart einen Wärmespeicher mit einem inneren, mit geschmolzenem Paraffin gefüllten Wärmespeicherteil, der von einem äußeren, mit Erde gefüllten Wärmespeicherteil umgeben ist. Der innere Wärmespeicherteil wird über auf einer hohen Temperatur gehalten, die für heißes Brauchwasser bereitgestellt wird.

Dokument JP 2006234310 A1 offenbart einen zentralen doppelwandigen Wärmetauscher, in dem ein Wärmeträgerfluid zirkuliert, das Wärme in ein Speichermedium innerhalb und außerhalb des Wärmetauschermediums einbringt. Auf der Innenseite und auf der Außenseite des Wärmetauschers ist jeweils ein Entzugswärmetauscher zur Aufnahme der Wärme des jeweiligen Speichermediums angeordnet.

Dokument DE 30 04 062 A1 offenbart ein Heizsystem unter anderem mit einem Latentwärmespeicher als Langzeitspeicher im Erdreich. Wärme aus einem Solarkollektor sowie Abwärme wird verschiedenen Wärmespeichern in Serie und zuletzt dem Langzeitspeicher zugeführt, dessen Speichermedium dadurch vorgewärmt wird. Ein Entzug von Wärme erfolgt bedarfsweise aus dem Langzeitspeicher alleine oder aus mehreren Wärmespeichern gleichzeitig. Um einer Sprengwirkung beim Einfrieren des Speichermediums Wasser im Langzeitspeicher entgegenzuwirken, sind die Wände des Langzeitspeichers gewölbt ausgebildet.

Dokument US 5 944 089 A offenbart auch ein Energiespeichersystem mit einer Speichertankeinrichtung.

Aus der EP 1 807 672 B1 ist ein Energiespeichersystem bekannt, der mit hohem Wirkungsgrad zum Wärmen und Kühlen von Gebäuden und Einrichtungen eingesetzt werden kann, wobei besonders beim Einsatz einer Absorptionswärmepumpe zum Wärmeentzug im Winter und lediglich eines Gebläses zum Kühlen im Sommer ein wirtschaftlicher Betrieb möglich ist. Mit besonderem Vorteil kann das Energiespeichersystem dort eingesetzt werden, wo in kurzen Zeiträumen Spitzenlasten zum Kühlen gefordert sind, wie etwa in Messehallen.

Dies wird unter anderem durch einen speziellen Speichertank mit Wärmetauscherebenen erreicht, die bei Bedarf zu- oder abschaltbar sind. Durch einen Gradienten der Wärmetauscherschlangen in den Wärmetauscherebenen sowohl in radialer als auch in axialer Richtung sowie einer günstigen Anordnung von Zu- und Rücklauf der Wärmetauscherschlangen innerhalb der einzelnen und zwischen benachbarten Wärmetauscherebenen kann ein über das Speichervolumen sehr homogenes Laden und Entladen des Speichertanks erfolgen. In einer Ausgestaltung ist der Speichertank ein Eisspeicher, dessen Temperatur mit geringer Varianz um den Gefrierpunkt schwankt.

Von der Konzeption her ist das dort beschriebene Energiespeichersystem für die Versorgung größerer Einheiten geeignet, insbesondere für solche, die über längere Zeit einen eher geringen Kältebedarf haben, der jedoch zeitweise sprunghaft ansteigt. Für die Versorgung kleinerer Einheiten, wie etwa der Versorgung von Einfamilienhäusern, ist das bekannte Energiespeichersystem nicht wirtschaftlich.

Ferner ist aus der DE 10 2008 041 715 A1 ein Energiespeichersystem bekannt, bei dem zwei Speichertanks vorgesehen sind, die mit Wärmetauscheranordnungen versehen sind. Einer der Speichertanks ist im Erdreich vergraben und weist eine erste, eine zweite und eine dritte Wärmetauscheranordnung auf. Zwei Wärmeträgermedienkreisläufe sind gekoppelt und mit einem gemeinsamen Wärmeträgermedium durchströmt, das flüssig oder gasförmig sein kann.

Eine Aufgabe der Erfindung ist es, eine Speichertankeinrichtung für ein Energiespeichersystem so weiterzuentwickeln, dass dieser für kleinere Einheiten wirtschaftlich ist.

Eine weitere Aufgabe besteht darin, ein Energiespeichersystem mit einer Speichertankeinrichtung so weiter zu entwickeln, dass ein Energiespeichersystem mit gutem Wirkungsgrad für die Versorgung kleinerer Einheiten geschaffen wird.

Die Aufgaben werden durch die Merkmale der unabhängigen Ansprüche gelöst.

Vorteilhafte Ausgestaltungen der Erfindung sind den weiteren Ansprüchen, der Zeichnung und der Beschreibung zu entnehmen.

Gemäß einem ersten Aspekt der Erfindung wird eine Speichertankeinrichtung für ein Energiespeichersystem vorgeschlagen, umfassend wenigstens einen Speichertank mit einem Gehäuse, enthaltend ein Speichermedium und wenigstens eine erste Wärmetauscheranordnung in Kontakt mit dem Speichermedium, wobei das Speichermedium einen Phasenübergang mit Latentwärme aufweist, wobei die wenigstens erste Wärmetauscheranordnung ein erstes Wärmeträgermedium aufweist und innerhalb des Gehäuses wenigstens eine zweite Wärmetauscheranordnung mit einem zweiten Wärmeträgermedium und wenigstens eine dritte Wärmetauscheranordnung mit einem dritten Wärmeträgermedium angeordnet ist. Die zweite Wärmetauscheranordnung und die dritte Wärmetauscheranordnung umgeben die erste Wärmetauscheranordnung und die zweite Wärmetauscheranordnung und/oder die dritte Wärmetauscheranordnung zumindest bereichsweise an oder nahe einer Innenseite des Gehäuses in spät oder gar nicht erstarrenden Zonen des Speichermediums und/oder zumindest bereichsweise in einer Gehäusewand angeordnet sind.

Die erste Wärmetauscheranordnung ist im Gehäuse zentral angeordnet und umfasst axial übereinander angeordnete Ebenen mit spiralförmig angeordneten Wärmetauscherrohren, und ist dafür vorgesehen, dem Speichertank in einer Entzugsperiode, etwa über eine Wärmepumpe, Wärme zu entziehen, bis dieser thermisch entladen ist. Der thermische Entladevorgang kann so lange betrieben werden, bis das gesamte zur Umwandlung bestimmte Speichermedium seinen Aggregatzustand von z.B. flüssig nach fest geändert hat. Die entzogene Wärme kann z.B. zum Heizen und/oder zur Warmwasserbereitung verwendet werden. Dazu kann mit einer Wärmepumpe das Temperaturniveau des die entzogene Wärme transportierenden ersten Wärmeträgermediums entsprechend angehoben werden. Das erste Wärmeträgermedium ist vorzugsweise flüssig, z.B. Sole oder ein Wasser-Glykol-Gemisch. Zweckmäßigerweise ist die erste Wärmetauscheranordnung so in dem Gehäuse angeordnet, dass ein kontrolliertes Erstarren und Auftauen des Speichermediums erfolgen kann, das eine Spreng- oder Druckwirkung auf das Gehäuse des Speichertanks vermindert. Sinnvollerweise kann das Gehäuse alternativ oder zusätzlich einen Pufferbereich aufweisen, der einen Volumenzuwachs des Speichermediums aufnehmen kann.

Ein Vorteil der Anordnung der zweiten und/oder dritten Wärmetauscheranordnung an der Innenseite des Gehäuses besteht darin, dass das erstarrende Speichermedium praktisch nicht an die Gehäusewand gelangt. Vorzugsweise umgibt die zweite und/oder dritte Wärmetauschereinrichtung wenigstens bereichsweise die erste Wärmetauscheranordnung, wodurch das Speichermedium nahe der Gehäusewand länger flüssig bleiben kann. Bei einer Anordnung innerhalb der Gehäusewand wird die Wärmetauscheranordnung bei der Herstellung des Gehäuses einfach mit eingegossen. Das zweite Wärmeträgermedium kann insbesondere gasförmig sein, während das dritte Wärmeträgermedium insbesondere flüssig sein kann.

Gegebenenfalls kann die zweite Wärmetauscheranordnung aus mehreren separaten Wärmetauscheranordnungen bestehen, die z.B. an unterschiedlichen Positionen im Speichertank angeordnet sein können.

Günstigerweise kann zumindest die zweite Wärmetauscheranordnung separat von der ersten Wärmetauscheranordnung betreibbar sein, insbesondere regelbar oder steuerbar sein. Dadurch kann die Speichertankeinrichtung flexibel verwendet werden, beispielsweise in Verbindung mit einer elektronischen Regel- und/oder Steuereinheit, welche durch Auswertung verschiedener Messwerte und durch Beeinflussen der Volumenströme der Wärmeträgermedien mit Hilfe von Stelleinrichtungen optimierte Energieerträge sicherstellt.

Die zweite Wärmetauscheranordnung kann bereichsweise an einer Innenseite des Gehäuses und/oder in der Gehäusewand des Gehäuses angeordnet sein.

Die dritte Wärmetauscheranordnung kann im bestimmungsgemäßen Einbauzustand wenigstens bereichsweise in einem unteren Bereich des Gehäuses angeordnet sein. Denkbar ist jedoch auch eine Anordnung im oberen Bereich des Gehäuses. Ähnlich wie die zweite Wärmetauschereinrichtung kann die dritte Wärmetauscheranordnung zumindest bereichsweise an einer Innenwand des Gehäuses und/oder zumindest bereichsweise innerhalb der Gehäusewand angeordnet sein. Ferner kann die dritte Wärmetauscheranordnung aus mehreren seriell und/oder parallel verschalteten Segmenten bestehen.

Das Speichermedium ändert unter Freisetzung oder Aufnahme latenter Wärme seinen Aggregatzustand, beispielsweise zwischen flüssig und fest. Günstigerweise ist das Speichermedium Wasser. Denkbar sind jedoch auch andere Materialien denkbar, z.B. Paraffin, je nach gewünschtem Temperaturniveau des Speichermediums. Bei seinen Phasenübergängen variiert die Temperatur des Speichermediums kaum, da beim Wechsel des Aggregatzustands, je nach Richtung, latente Wärme frei oder absorbiert wird. Die Temperatur schwankt daher in geringen Grenzen um die Erstarrungstemperatur des Speichermediums, z.B. um den Gefrierpunkt von Wasser um ±0°C. Die Betriebstemperatur des Speichermediums einer erfindungsgemäßen Speichertankeinrichtung mit Wasser als Speichermedium liegt meistens in einem praktischen Anwendungsbereich zwischen -5°C und +15°C.

Mit der zweiten Wärmetauscheranordnung und auch mit der dritten Wärmetauscheranordnung kann das Speichermedium regeneriert werden, wenn dieses thermisch entladen ist, und ansonsten Wärmeenergie dem Speichermedium zugeführt und im Speichertank gespeichert werden, während die erste Wärmetauscheranordnung ganz oder zumindest überwiegend zum Wärmeentzug vorgesehen ist. Die zweite und dritte Wärmetauscheranordnung führt mit besonderem Vorteil dem Speichermedium bzw. dem Speichertank Energie zu. Unter "thermisch entladen" ist der vollständige Übergang des Speichermediums von einem Aggregatzustand, etwa flüssig, in den energetisch niedrigeren, etwa fest, zu verstehen, wobei das Speichermedium die dabei anfallende latente Wärme abgegeben hat. Im Falle von Wasser als Speichermedium ist dieses thermisch entladen, wenn es vollständig zu Eis gefroren ist. Beim Aggregatwechsel in die andere Richtung wird die latente Wärme wieder aufgenommen und das Speichermedium thermisch wieder geladen.

Dem Speichertank ist Wärme auf relativ niedrigem Temperaturniveau entnehmbar, die beispielsweise durch eine Wärmepumpe für ein höheres Temperaturniveau genutzt werden kann. Optional kann in der warmen Jahreszeit je nach Auslegung und zumindest solange noch erstarrtes Speichermedium verfügbar ist, das regeneriert werden kann, z. B. verflüssigt werden kann, beispielsweise über eine Luftumwälzpumpe oder einen Lüfter Kälte entnehmbar sein, die zu Kühlzwecken verwendet werden kann. Bei einem Heizbedarf in der Entzugsperiode liefert der Speichertank Wärme, während sowohl während der Entzugsperiode wie auch in der warmen Jahreszeit praktisch jede Art von überschüssiger Wärme in den Speichertank eingespeist werden kann, insbesondere über Umgebungsluft aus verschiedensten Quellen. Wird z.B. mittels des zweiten Wärmeträgermediums überschüssige Wärme in der Entzugsperiode in den Speichertank eingespeist, verzögert dies das thermische Entladen des Speichertanks und macht diese eingespeiste Energie nutzbar, wobei vorteilhafterweise solange Energie eingespeist werden kann, solange die Temperatur des zweiten Wärmeträgermediums oberhalb der des Speichermediums liegt. Im Prinzip kann das zweite Wärmeträgermedium immer dann Wärme in den Speichertank eintragen, solange dessen Temperatur oberhalb der (mittleren) Temperatur des Speichermediums liegt.

Die Kombination der ersten Wärmetauscheranordnung zum Wärmeentzug mit der zweiten, insbesondere gasversorgten zweiten Wärmetauscheranordnung sowie der dritten Wärmetauscheranordnung ist besonders vorteilhaft, da auch Wärmeenergie mit niedrigem Temperaturniveau (niederkalorische Wärme) in den Speichertank eingebracht werden kann, die bei bekannten Systemen nicht effizient oder gar nicht nutzbar ist. Während der Entzugsperiode wird das Speichermedium stark, bis zum Gefrierpunkt des Speichermediums, abgekühlt.

Damit kann über das zweite Wärmeträgermedium noch Energie eingespeist werden, die nur knapp oberhalb dieser Temperatur liegt. Insbesondere kann Wärmeenergie eingespeist werden, die z.B. bei 20°C und darunter liegt. Dabei steigt die Effizienz der Speichertankeinrichtung mit Fortschreiten der Entzugsperiode und entsprechend sinkender Temperatur des Speichermediums. Dies gilt auch bei der Einspeisung von Energie mit dem dritten Wärmeträgermedium.

Die mittlere Temperatur des Speichermediums liegt in der Entzugsperiode bei oder unterhalb der Temperatur des den Speichertank umgebenden Materials, z.B. Erdreich. Das zum Heizen nutzbare Temperaturniveau des Speichertanks bzw. des Speichermediums sinkt in der Entzugsperiode ab. Sinkt die Temperatur des Speichermediums beispielsweise auf 2°C ab, kann mit dem zweiten und/oder dritten Wärmeträgermedium noch mit Temperaturen etwas oberhalb von 2°C Energie in das Speichermedium eingetragen werden. Damit kann beispielsweise Abluft einer Lüftungsanlage für Gebäude genutzt werden, selbst wenn diese bereits entwärmt ist und mit nur 6-7°C zur Verfügung steht. Luft kann direkt genutzt werden, ohne Zwischenschalten von Luft-Sole-Wärmetauschern und die damit einhergehenden Verluste.

Zu Beginn der Entzugsperiode sind meist zahlreiche Umgebungswärmequellen mit relativ hohen Temperaturen zum Einspeisen in den Speichertank verfügbar, insbesondere wenn noch weitere Wärmetauscheranordnungen zum Einspeisen von Energie in den Speichertank vorgesehen sind, wobei die Umgebungswärmequellen mit Fortschreiten der Entzugsperiode und sinkenden Außentemperaturen immer weniger werden. Gleichzeitig kann zugeführte Wärmeenergie im Speichertank bzw. im Energiespeichersystem immer effizienter gespeichert werden, da auch Energie niederkalorischer Wärmequellen, insbesondere Umgebungsluft und dergleichen, mit absinkender Speichermediumstemperatur immer effizienter gespeichert werden kann. Das zweite und/oder dritte Wärmeträgermedium hat dabei ausgangsseitig ungefähr die (niedrige) Temperatur des Speichermediums.

Besonders günstig kann das zweite Wärmeträgermedium im Wesentlichen gasförmig sein, insbesondere kann das zweite Wärmeträgermedium Luft sein, insbesondere Umgebungsluft und/oder Abwasserkanalabluft und/oder Gebäudeabluft, besonders bevorzugt feuchtebeladene Luft.

"Im Wesentlichen gasförmig" soll bedeuten, dass beispielsweise Verunreinigungen fester oder flüssiger Art im zweiten Wärmeträgermedium enthalten sein können, wie etwa Stäube und Flüssigkeitströpfchen. Die zweite Wärmetauscheranordnung ist direkt von dem Wärme liefernden Gas, insbesondere Luft, als Wärmeträgermedium durchströmt, die insbesondere (bis auf zusätzlich eingebrachte Umwälzenergie) aus kostenlosen und/oder frei verfügbaren Quellen stammen kann. Bei Umgebungsluft als zweites Wärmeträgermedium ist besonders günstig, feuchtebeladene Luft als zweites Wärmeträgermedium einzusetzen, womit eine vorteilhafte Gewinnung von Kondensationsenergie aus dem in der Luft enthaltenen Wasserdampf möglich ist. Die Kondensationsenergie bedeutet zur Wärme einen zusätzlichen, relativ hohen Wärmeeintrag in das Speichermedium. Als zweites Wärmeträgermedium kann auch Luft aus Erdwärmeabsorbern, Luft aus Solarluftabsorbern, mit Windenergie erwärmte oder umgewälzte Luft, und/oder Abwärmequellen und/oder etwaiger Mitnutzung von Umgebungsquellen wie Abwasserkanalluft, Luft, die unter Hausdächern oder aus Dachräumen entnommen wird und/oder (gegebenenfalls gereinigte) Luft aus Abluftanlagen und/oder Abgase, wie z. B. Industrieabgase, Prozessabgase. motorische Verbrennungsabgase, Abgase von Kraft- und Arbeitsmaschinen etc., der zweiten Wärmetauscheranordnung zur Nutzung der darin enthaltenen Wärme bzw. Restwärme zugeführt werden. Mit dem gasförmigen zweiten Wärmeträgermedium kann in die Luft abgegebene Abwärme im Speichertank vorteilhaft genutzt werden.

Günstigerweise kann der Speichertank bestimmungsgemäß mit seiner Umgebung wenigstens zeitweise in Wärmetausch stehen, so dass Umgebungswärme genutzt werden kann oder die nähere Speicherumgebung als Erweiterung des Speichers genutzt werden kann. Der Ausdruck "bestimmungsgemäß mit seiner Umgebung in Wärmetausch stehend" soll bedeuten, dass der Speichertank für seine reguläre Funktion zumindest zeitweise in Wärmetausch mit seiner Umgebung steht, d.h. nicht oder zumindest zeitweise nicht gegen den Wärmetausch isoliert ist. Dies trifft auf einen erdunterstützten Speichertank zu, der im Erdreich vergraben ist und gezielt z.B. Wärme aus dem umgebenden Erdreich aufnimmt.

Günstigerweise kann eine Fördereinrichtung, etwa ein Ventilator, eine Pumpe, ein Kompressor oder dergleichen, in einem Vorlauf der zweiten Wärmetauscheranordnung vorgesehen sein, welche das zweite Wärmeträgermedium fördert. Auf diese Weise kann auch die Abwärme der Fördereinrichtung vorteilhaft genutzt und über das zweite Wärmeträgermedium in den Speichertank mit eingespeist werden. Da die Luft in die zweite Wärmetauscheranordnung hineingepresst wird, herrscht dort automatisch ein etwas höherer Druck als Umgebungsdruck. Mit Vorteil kann auch gezielt ein noch höherer Druck eingestellt werden, insbesondere wenn Umgebungsluft genutzt wird. Selbst bei negativer Wärmedifferenz zwischen Umgebungstemperatur und Speichermediumstemperatur kann noch Energie aus der (komprimierten) Umgebungsluft gewonnen werden, und die Luft tritt aus dem Speichertank mit einer Temperatur unterhalb der Umgebungstemperatur aus.

Eine vorteilhafte Ausgestaltung sieht vor, dass der Speichertank als transportabler Behälter ausgebildet und mit wenigstens einer Wärmetauscheranordnung vorkonfektioniert sein kann. Dabei kann der Speichertank in der Art einer Regenwasserzisterne ausgebildet sein, die zum Beispiel in einem Betonwerk gegossen wird. Der Speichertank kann einbaufertig einem Anwender geliefert werden und muss dort lediglich mit den entsprechenden Anschlüssen für die verschiedenen Wärmeträgermedien verbunden werden. Zweckmäßigerweise kann der Speichertank bereits mit dem ersten Wärmeträgermedium befüllt sein. Der Speichertank muss nicht vor Ort gefertigt werden, was den Einbau der erfindungsgemäßen Speichertankeinrichtung für den Kunden erheblich vereinfacht und die Verwendung des Speichertanks flexibel macht.

Die skalierbare Größe und weitgehend variable Formgestaltung des Speichertanks macht es günstigerweise möglich, den Speichertank z.B. im Vorgarten eines Einfamilienhauses zu vergraben, ohne dass die darüber liegen Flächen als Nutzfläche verloren gehen oder dass die Optik der Umgebung dadurch beeinträchtigt würde. Auch können z.B. Garagen oberhalb des Speichertanks errichtet werden, so dass durch den Speichertank keine Parkfläche verloren geht. Der Speichertank kann bei entsprechender Formgebung und Stabilität gleichzeitig auch als Fundament oder Untergrund für eine Garage oder ein anderes Bauwerk genutzt werden.

Gemäß einem weiteren Aspekt der Erfindung wird ein Energiespeichersystem vorgeschlagen mit einer Speichertankeinrichtung, wobei eine erste Wärmetauscheranordnung des Speichertanks, umfassend einen ersten Wärmeträgermedienkreislauf, mit einer Wärmepumpeneinheit gekoppelt ist und wenigstens eine zweite Wärmetauscheranordnung des Speichertanks, umfassend einen zweiten Wärmeträgermedienkreislauf, mit einer Wärmequelle gekoppelt ist, wobei die zweite Wärmetauscheranordnung ein gasförmiges Wärmeträgermedium aufweist, wobei wenigstens eine dritte Wärmetauscheranordnung mit einem dritten Wärmeträgermedienkreislauf im Gehäuse angeordnet ist. Die Wärmeträgermedienkreisläufe der Wärmetauscheranordnungen sind strömungsmäßig voneinander entkoppelt, entkoppelt, wobei die erste Wärmetauscheranordnung dazu vorgesehen ist, in einer Entzugsperiode Wärme aus dem Speichermedium bis zur thermischen Entladung zu entziehen.

Die zweite und/oder die dritte Wärmetauscheranordnung sind nahe einer Innenseite des Gehäuses in spät oder gar nicht erstarrenden Zonen des Speichermediums und/oder zumindest bereichsweise in einer Gehäusewand angeordnet.

Die unterschiedlichen Wärmeträgermedienkreisläufe können völlig unabhängig voneinander betrieben werden und sich vorteilhaft ergänzen. Die Wärmeträgermedienkreisläufe können voneinander entkoppelt sein. Insbesondere können die Wärmeträgermedienkreisläufe der zweiten und dritten Wärmetauscheranordnung unabhängig voneinander sein und beispielsweise mit unterschiedlichen Arten von Wärmeträgermedien betrieben werden.

Vorteilhaft kann wenigstens eines der Wärmeträgermedien gasförmig und wenigstens eines der Wärmeträgermedien flüssig sein.

Die dritte Wärmetauscheranordnung kann vorteilhaft mit einem zur Umgebung offenen Kollektor gekoppelt sein, was eine große Oberfläche zur Energieeinkopplung ermöglicht.

Die zweite und die dritte Wärmetauscheranordnung dienen überwiegend oder ausschließlich dazu, Wärme in den Speichertank einzutragen, mit dem das Speichermedium regeneriert und/oder erwärmt werden kann. Dadurch, dass das zweite Wärmeträgermedium gasförmig ist, kann Wärme aus z.B. Luft direkt verwendet werden, ohne verlustbehaftete Zwischenschaltung eines zusätzlichen Luft/Sole-Wärmetauschers zwischen der Luftquelle und dem zweiten Wärmeträgermedium, beispielsweise in Form eines Solarluftkollektors. Somit ergibt sich vorteilhaft eine entsprechend niedrige Temperaturspreizung zwischen der Wärme liefernden Luft, bzw. Gas, und dem Speichermedium im Speichertank mit der Folge einer höheren Energieausnutzung von frei verfügbaren Umgebungswärmequellen auch bei geringen Temperaturen, um damit den Speichertank möglichst schnell und effizient thermisch zu laden.

Die dritte Wärmetauscheranordnung ist mit einer oder mehreren Wärmequellen gekoppelt. Vorzugsweise ist die dritte Wärmetauscheranordnung mit einem Solarabsorber bzw. Kollektor gekoppelt, oder mit anderen permanent oder zeitweise verfügbaren Wärmequellen gekoppelt. Günstigerweise können eine oder mehrere Wärmequellen bedarfsweise an die dritte Wärmetauscheranordnung zuschaltbar oder abschaltbar sein. Es besteht eine weitgehende Freiheit, welche Arten von Wärmequellen genutzt werden können. Diese können temporär nach Verfügbarkeit und auch nach individuellen Vorlieben und Randbedingungen z.B. durch eine den Energieertrag optimierende Regel- und/oder Steuereinheit zu- und abgeschaltet werden.

Durch die zweite und die dritte Wärmetauscheranordnung können in den Speichertank ganzjährig verschiedenste Arten von verfügbaren Energiearten eingespeist, gespeichert und in der Entzugsperiode genutzt werden. Besonders vorteilhaft ist, wenn beide vorwiegend oder ganz zum Wärmeeintrag vorgesehenen Wärmetauscheranordnungen voneinander entkoppelt sind. Sie können z.B. unterschiedliche Wärmeträgermedien aufweisen, insbesondere Luft bei der zweiten Wärmetauscheranordnung und eine Flüssigkeit, z.B. ein Glykol-Wasser-Gemisch oder Sole, bei der dritten Wärmetauscheranordnung.

Durch die geringere Temperaturspreizung kann das thermisch entladene Speichermedium im Speichertank auch bei sehr geringen Außenlufttemperaturen ab ca. 2° bis 4°C aufwärts mit der zweiten Wärmetauscheranordnung wieder aufschmelzen, z. B. im Winter, wenn es vorübergehend eine Warmwetterphase gibt. Somit wird der Vorteil erreicht, dass das Energiespeichersystem besser für den ganzjährigen Betrieb von Wärmepumpenheizungen geeignet ist und insgesamt eine bessere Leistungsfähigkeit gerade auch für die Versorgung von Haushalten, z.B. Einfamilienhäusern, erreicht.

Selbstverständlich ist das Energiespeichersystem mit einer Regel- und/oder Steuereinheit verbunden, welche so betrieben werden kann, dass das Umweltangebot an natürlichen Quellen von Wärme und/oder von technischen Quellen wie z. B. Abwärme optimal ausgenutzt werden kann, indem die verschiedenen Wärmeangebote aus verschiedenen mit dem Energiespeichersystem verbundenen Wärmequellen gemessen, ausgewertet und dann bedarfsgemäß entsprechend beschaltet werden.

Mit Hilfe des erfindungsgemäßen Energiespeichersystems ist es möglich, verschiedene Wärmeangebote, welche die Umwelt oder andere Wärmenutzungsgelegenheiten zur Verfügung stellen, in optimaler Weise wahrzunehmen. Dies kann auch in Haushalten vorteilhaft genutzt werden und ist nicht auf Großverbraucher beschränkt.

Der Speichertank wird üblicherweise in das Erdreich eingegraben, um wenigstens zeitweise einen Wärmefluss von der Umgebung in den Speichertank zuzulassen. Eine Grundwasserberührung des Gehäuses des Speichertanks (bei Wasser als Speichermedium) wirkt zwar energetisch günstig, ist jedoch keineswegs für die Funktion des Speichertanks notwendig. In kälteren Regionen ist eine Anordnung unterhalb der Bodenfrostgrenze sinnvoll, um einen unnötigen Wärmeverlust in kalten Jahreszeiten oder auch eine Sprengwirkung auf den Speichertank zu verringern oder zu vermeiden und um z.B. das Einfrieren von Anschlussleitungen zu verhindern.

Es ist vorteilhaft für das Energiegleichgewicht des Speichertanks bzw. des Energiespeichersystems, wenn ein großer Teil der Energie durch geeignete Wärmequellen möglichst regelmäßig oder häufig eingespeist wird. Günstige Wärmequellen zur Nutzung im Energiespeichersystem sind beispielsweise Solarkollektoren, Umgebungsluft, Umgebungswärmestrahlung, Abwasserkanalluft, Regenwasser, Brauchwasser, Abwärme, Erdwärme und Windenergie. Wärmeenergie verschiedener Herkunft kann im Speichertank gespeichert und von einem Nutzer genutzt werden.

Im Speichertank des Energiespeichersystems können unterschiedliche intervallartig anfallende Energieformen verfügbar gemacht und effektiv z.B. zum Heizen genutzt werden, was insbesondere in Verbindung mit Wärmepumpen für Heizungsanlagen vorteilhaft ist. Die Funktion als Energiespeichersystem beinhaltet, dass alle eingespeisten günstigen Wärmemengen entweder sofort oder auch erst später, je nach Bedarf, entnommen werden können.

In der Entzugsperiode (z.B. kalte Jahreszeit) kann nicht nur dem Speichertank Wärme entzogen werden. Je nach Betriebsbedingungen kann auch Feuchtigkeit, die im Erdreich enthalten ist, welches den Speichertank umgibt, eingefroren oder das Erdreich zumindest abgekühlt werden. Das in der kalten Jahreszeit im Speichertank erstarrte Speichermedium, z.B. Eis, kann gegebenenfalls in einer optionalen Betriebsweise in der warmen Jahreszeit wenigstens vorübergehend zur Kühlung genutzt werden, solange das Speichermedium noch nicht vollständig wieder verflüssigt ist. Wenn der Speichertank mit dem umgebenden Erdreich in Wärmeaustausch steht, wirkt eine äußere Oberfläche seines Gehäuses vorteilhaft als Erdsonde bzw. Erdkollektor. Auch kann der Speichertank in seiner Funktion als Wärmekollektor ganz oder teilweise beispielsweise von einem grobkörnigen Kiesbett umgeben im Erdreich eingelagert werden, um in dieses Kiesbett dann z.B. Regenwasser aus Regenrinnen - eventuell durch Schaltmittel gesteuert - einzuleiten, welches eine Menge an Wärmeenergie mit sich führt und diese in die Umgebung des Gehäuses abgibt oder/und auch direkt an die kältere Gehäusewand des Speichertanks, welche diese Wärme dann in das Innere des Speichertanks weiterleitet, so dass beispielsweise anfallendes Regenwasser auf diese Weise zur Regeneration des Speichermediums genutzt werden kann.

Ferner kann der Speichertank wie eine Regenwasserzisterne zur Regenwassernutzung eingesetzt werden. So kann ein Teil des Speichermediums Wasser, z.B. ein Drittel oder mehr, beispielsweise zur Gartenbewässerung eingesetzt werden, während der Speichertank dann zur Regenrückhaltung eingesetzt werden kann, was in einigen Ländern bei Einfamilienhäusern gesetzlich vorgeschrieben ist. Das Speichermedium kann dann einfach mit Regenwasser ergänzt werden.

In einer ökologisch günstigen Ausgestaltung kann die dem Speichertank Energie entziehende Wärmepumpeneinheit eine oder mehrere Absorptions-Wärmepumpen und/oder eine oder mehrere Kompressions-Wärmepumpe umfassen. Liegt der Schwerpunkt des Energiespeichersystems auf dem Decken des Heizbedarfs beim angeschlossenen Verbraucher, kann der Einsatz von Wärmepumpen auf energetisch günstige und ökonomisch sinnvolle Weise erfolgen. Prinzipiell können auch Wärmepumpen anderer Bauart, z.B. auf der Basis von Peltierelementen, verwendet werden, wenn diese, mit einem eigenen Wärmetauscher ausgestattet, an einen Gas- oder Solekreislauf des Energiespeichers anschließbar sind.

In bevorzugter Ausgestaltung umfasst die Wärmepumpeneinrichtung insbesondere eine Gasabsorptionswärmepumpe. Die Vorteile einer Absorptionswärmepumpe sind aus der EP 1 807 672 B1 für größere Speichertanks bereits bekannt, bestehen hier für die kleineren erfindungsgemäßen Energiespeichersysteme jedoch unverändert fort, zumal die Industrie zunehmend Absorptionswärmepumpen auch für kleinere Leistungen weiterentwickelt und anbietet.

Gemäß einer günstigen Ausgestaltung kann der an die dritte Wärmetauscheranordnung gekoppelte offene Kollektor eine möglichst große Oberfläche aufweisen. "Offen" soll bedeuten, dass der Kollektor unmittelbar der Umgebung ausgesetzt ist. Eine große Oberfläche kann insbesondere durch ovale Leitungsquerschnitte bewirkt werden. Werden die Leitungen des Kollektors in einer Kollektorebene parallel zu ihrer langen Achse angeordnet, können mehr Leitungen pro Flächeneinheit untergebracht werden als bei runden Querschnitten. Der Kollektor wird lediglich höher als mit Leitungen mit runden Querschnitten vergleichbarer Querschnittsfläche. Der ovale Querschnitt ermöglicht über die große Oberfläche eine Verbesserung der Energieeinspeisung. Der Kollektor kann vorteilhaft schwimmend montierbar sein, beispielsweise auf einem Dach oder dergleichen. So kann der Kollektor nur im mittleren Bereich gelagert sein und zu den Seiten überstehen, so dass eine seitliche thermische Ausdehnung problemlos möglich ist.

In einer günstigen Ausgestaltung des Energiespeichersystems kann die zweite Wärmetauscheranordnung mit einem Abwasserkanal über eine Ringleitung gekoppelt sein, wobei Kanalluft des Abwasserkanals durch die zweite Wärmetauscheranordnung führbar und in den Abwasserkanal zurückleitbar ist. Die in der hohen Luftfeuchte in der zudem auch relativ warmen Kanalluft enthaltene Energie kann in den Speichertank geleitet und gespeichert werden. Gleichzeitig kann eine Geruchsbelästigung der Umgebung vermieden werden, da die Kanalluft wieder in den Kanal zurückgeleitet wird.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen in schematischer Darstellung:
- Figur 1: einen Prinzipschaltplan einer Ausgestaltung eines erfindungsgemäßen Energiespeichersystems mit einem Speichertank und drei Wärmetauscheranordnungen;
- Figur 2: eine günstige Anordnung mit einem Abwasserkanal als günstige Luftquelle für eine zweite Wärmetauscheranordnung;
- Figur 3: in einer Seitenansicht ein Ausführungsbeispiel eines im Erdreich vergrabenen, umgebungsgestützten Speichertank;
- Figur 4: eine Speichertankeinrichtung in aufgeschnittener Darstellung mit einer günstigen Anordnung mit einer zentralen ersten Wärmetauscheranordnung und zwei äußeren, die erste Wärmetauscheranordnung umgebende Wärmetauscheranordnungen;
- Figur 5: einen Schnitt durch eine Speichertankeinrichtung entsprechend einer Ausgestaltung nach Figur 4, mit Eispelzen um Wärmetauscherrohre der ersten Wärmetauscheranordnung;
- Figur 6a, 6b: Querschnitte eines Speichertanks als Draufsicht auf eine Ebene einer als Doppelspirale angeordneten ersten Wärmetauscheranordnung mit unterschiedlichen Anordnungen einer diese umgebende zweite Wärmetauscheranordnung; und
- Figur 7: eine Schrägansicht einer günstigen Ausgestaltung eines Kollektors, der mit einer Speichertankeinrichtung nach der Erfindung koppelbar ist; und
- Figur 8: ein Schnitt durch den Kollektor aus Figur 7 mit ovalen Kollektorrohren.

### Beschreibung der Ausführungsbeispiele

Im Wesentlichen gleich bleibende Teile sind in den Figuren grundsätzlich mit den gleichen Bezugszeichen beziffert.

Im Folgenden ist die Erfindung anhand eines Latentspeichers beschrieben, der beispielsweise Wasser als Speichermedium enthält. Denkbar sind jedoch auch andere Speichermedien oder Mischungen von Speichermedien.

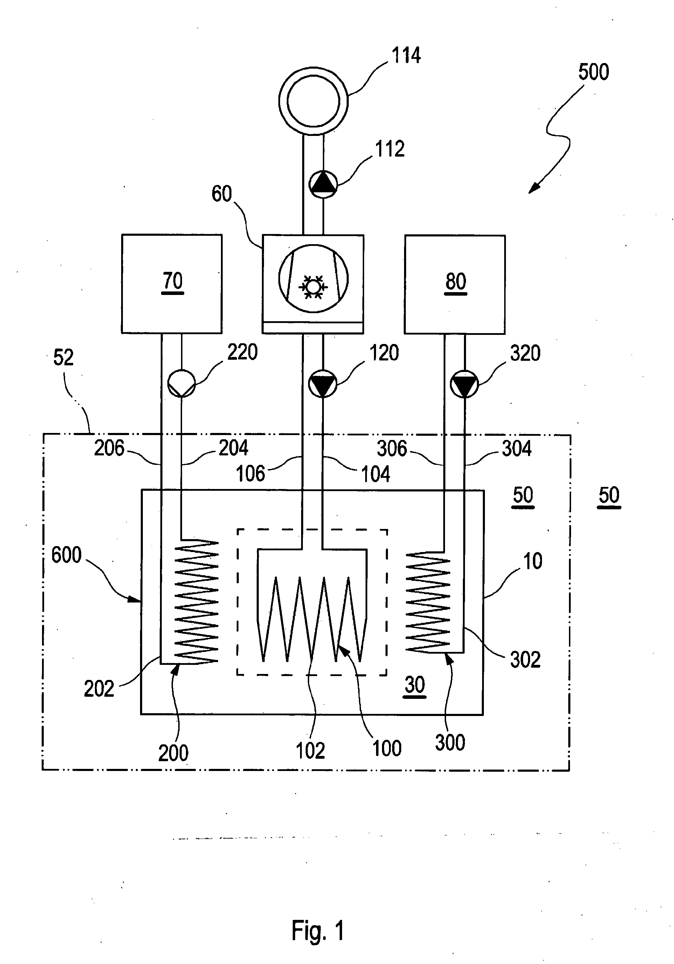

Figur 1 zeigt schematisch einen Prinzipschaltplan einer vorteilhaften Ausgestaltung eines erfindungsgemäßen Energiespeichersystems 500 mit einer Speichertankeinrichtung 600, welche einen Speichertank 10 umfasst mit einer ersten, zweiten und dritten Wärmetauscheranordnung 100, 200, 300, die im Gehäuse des Speichertanks 10 angeordnet sind. Bei der ersten Wärmetauscheranordnung 100 kommt ein erstes Wärmeträgermedium 102, bei der zweiten Wärmetauscheranordnung 200 ein zweites Wärmeträgermedium 202 und bei der dritten Wärmetauscheranordnung 300 ein drittes Wärmeträgermedium 302 zum Einsatz. Der Speichertank 10 enthält als Speichermedium 30 beispielsweise Wasser.

Der Speichertank 10 ist ein umgebungsgestützter Speichertank 10, der mit der Umgebung zumindest zeitweise gezielt im Wärmetausch steht, d.h. zumindest zeitweise ist ein Wärmefluss von der Umgebung in den Speichertank 10 (oder aus diesem in die Umgebung) für die Funktion des Speichertanks 10 erwünscht. Beispielsweise ist der Speichertank 10 in diesem Ausführungsbeispiel im Erdreich 50 vergraben, wobei der Speichertank 10 nahe der Oberfläche angeordnet ist. Das Bezugszeichen 52 soll eine Systemgrenze im den Speichertank 10 umgebenden Erdreich 50 andeuten und betrifft einen Bereich im Erdreich 50, der noch wesentlich Wärme in den Speichertank 10 eintragen kann, d.h. einen typischen Wirkungsbereich zwischen der Umgebung des Speichertanks 10 und dem Speichertank 10 selbst, der typischerweise abhängig ist von Auslegungs-Parametern wie z.B. der Größe des Speichertanks 10. Das Erdreich 50 kann einerseits als Geothermie-Quelle dienen und andererseits in den üblichen Entzugsperioden, beispielsweise Heizperioden, Erdwärme an den praktisch unisolierten Speichertank 10 liefern. Darüber hinaus kann das umliegende Erdreich 50 aufgrund seiner Masse und Wärmespeicherfähigkeit zeitweise sogar als Erweiterung des Speichertanks 10 dienen.

Innerhalb des Speichertanks 10 deutet die unterbrochene Linie einen typischen Wirkungsbereich der ersten Wärmetauscheranordnung 100 an, mit der Energie aus dem Speichertank 10 entzogen wird, z. B. zum Betrieb einer Wärmepumpe 60, welche die entnommene Wärme aus dem Speichertank 10 auf ein höheres Temperaturniveau hebt. Diese erste Wärmetauscheranordnung 100 arbeitet mit Flüssigkeit als Wärmeträgermedium 102, etwa Sole oder einem Glykol-Wasser-Gemisch oder dergleichen, die mit einer Pumpe 120 umgewälzt wird.

Die Wärmepumpe 60 kann auch ein Wärmepumpensystem mit einer Mehrzahl an Wärmepumpen sein. Die Wärmepumpe 60 setzt das relativ niedrige Temperaturniveau des Speichermediums 30 des Speichertanks 10 auf ein höheres Temperaturniveau um und versorgt, z.B. über eine Pumpe 112, einen oder mehrere Wärmeverbraucher 114, etwa ein zu beheizendes Gebäude. Die Wärmepumpeneinheit 60 kann eine Absorptions-Wärmepumpe und/oder eine Kompressions-Wärmepumpe und/oder eine andere Art von Wärmepumpe umfassen.

Die zweite Wärmetauscheranordnung 200 dient zur Regeneration des Speichermediums 30 und führt dem Speichertank 10 Wärme zu. In bestimmten Betriebsphasen ist auch denkbar, dass die zweite Wärmetauscheranordnung 200 zeitweise auch zu Kühlzwecken eingesetzt werden kann, wobei ausreichend abgekühltes Speichermedium 30 als Kältequelle genutzt werden könnte.

Günstigerweise kann das Energiespeichersystem 500 in solchen optionalen Phasen so betrieben werden, dass eine Kühlung mit Hilfe des Speichertanks 10 auch dann möglich ist, wenn das Speichermedium 30 bereits vollständig abgeschmolzen ist, z.B. im Hochsommer. In dieser Betriebsart kann auch die sensible Wärme des Speichermediums 30 genutzt werden, was zur Temperaturänderung des Speichermediums 30 führt. In einem solchen Fall können zur Kühlung die tageszeitlichen Temperaturschwankungen genutzt werden, indem z. B. nachts, wenn niedrigere Außentemperaturen herrschen, das Speichermedium 30 z.B. mittels Umgebungsluft (Wärmetauscheranordnung 200) oder z.B. solegeführten Luftwärmetauschern (z.B. Wärmetauscheranordnung 300) abgekühlt wird, so dass dann tagsüber, wenn die Außentemperaturen wieder deutlich höher sind, der nun kühlere Speicherinhalt zur Kühlung beispielsweise von Wohn- und Büroräumen zur Verfügung steht. Die Versorgungseinrichtung 70 kann entsprechende Schaltmittel beinhalten und leitet das entsprechende Wärmeträgermedium 202 den angeschlossenen "Kälte"-Verbrauchern zu (zur Vereinfachung nicht dargestellt). Diese Art der Nutzung tageszeitlicher Temperaturschwankungen mit Hilfe des Speichertanks 10 ist mit bekannten Energiespeichersystemen nicht möglich.

Als Wärmeträgermedium 202 wird ein Gas eingesetzt, vorzugsweise Luft. Die Wärmeenergie der Luft, d.h. des zweiten Wärmeträgermediums 202, wird direkt über die Wärmetauscheranordnung 200 an das Speichermedium 30 abgegeben. Dabei ist von Vorteil, wenn die Luft eine erhöhte Luftfeuchtigkeit aufweist, da der Energieeintrag von feuchter Luft wegen der Kondensationswärme des bei der Abkühlung der Luft in der Wärmetauscheranordnung 200 auskondensierenden Wassers verglichen mit trockener Luft besonders hoch ist. Über die zweite Wärmetauscheranordnung 200 wird Wärmeenergie in das Speichermedium 30 des Speichertanks 10 eingetragen, d.h. der Speichertank 10 aufgeladen. Um eine möglichst hohe Ausnutzung der zugeführten Wärmeenergie zu erreichen, ist es zweckmäßig, wenn die zweite Wärmetauschereinrichtung 200 eine möglichst große Oberfläche zum Wärmetausch aufweist. So ist es günstig, Wellschläuche für die zweite Wärmetauschereinrichtung 200 zum Transport des Wärmeträgermediums 202 einzusetzen. Eine Fördereinrichtung 220, etwa ein Ventilator, ein Gebläse, eine Umwälzpumpe oder dergleichen, ist beim Energieeintragen immer im Vorlauf 204 der Wärmetauscheranordnung 200 angeordnet, so dass die Abwärme der Fördereinrichtung 220 mit genutzt werden kann.

An den Vorlauf 204 ist eine Wärmequelle 70 z.B. in Form einer Wärme liefernden Versorgungseinrichtung 70 für ein gasförmiges Medium, z.B. Umgebungsluft, zum Wärmeeintrag in den Speichertank 10 angeschlossen. Die Versorgungseinrichtung 70 kann im einfachsten Fall zwei offene Rohrenden aufweisen, welche für Zu- und Abluft offen zur Umgebung sind, oder der Rücklauf 206 weist ein offenes Rohrende auf, während der Vorlauf 204 an ein Gerät angeschlossen ist, dessen Wärme liefernde Abluft über die zweite Wärmetauscheranordnung 200 in den Speichertank 10 eingeleitet werden soll. Die Versorgungseinrichtung 70 kann auch eine (komplexe) Zu- und Abluftanlage, ggf. mit Steuerung und/oder Regelung, umfassen oder ein Wärmequellensystem mit diversen Anschlüssen für verschiedenste Gas-Wärmequellen und Abgasführung (z.B. mit Luft als Medium). Ebenso ist eine Anschlussmöglichkeit für ein Kühlsystem denkbar, z. B. für ein Gebäudekühlsystem, das mit kühler Abluft aus der zweiten Wärmetauscheranordnung 200 versorgt werden kann, oder mit der Wärme aus der Abluft dem Speichertank 10 zugeführt werden kann. Hierzu kann die Strömungsrichtung des zweiten Wärmeträgermediums 202 im zweiten Wärmetauscher 200 auch umgekehrt werden.

Grundsätzlich ist es denkbar, für die Versorgungseinrichtung 70 unterschiedliche Gasquellen, insbesondere Luftquellen, vorzusehen, welche das Wärmeträgermedium 202 der zweiten Wärmetauscheranordnung 200 zur Verfügung stellen und zwischen diesen unterschiedlichen Gas- bzw. Luftquellen bedarfsweise umzuschalten. So kann z.B. zu einem Zeitpunkt eine Gas- bzw. Luftquelle ausgewählt werden, die gerade einen besonders günstigen Energieeintrag liefern kann und durch eine andere Gas- bzw. Luftquelle ersetzt werden, wenn deren Energieeintrag abnimmt und unter einen möglichen Energieeintrag einer oder mehrerer anderer Gas- bzw. Luftquellen fällt.

Mögliche Gas- bzw. Luftquellen können sehr vielfältig sein und einfach an das Energiespeichersystem 500 bzw. die zweite Wärmetauscheranordnung 200 angekoppelt werden. Günstigerweise kann als Gas- bzw. Luftquelle Umgebungsluft eingesetzt werden, die den zusätzlichen Vorteil der Gewinnung von Verflüssigungswärme des Wassergehalts der Luft bietet.

Ferner ist es auch möglich, dass der Vorlauf 204 und/oder der Rücklauf 206 bereichsweise auf dem Weg zum Speichertank 10 hin bzw. vom Speichertank 10 weg über mehrere Meter im Erdreich 50 verlegt sind, um zusätzlich Erdwärme aufzunehmen. Diese Bereiche von Vorlauf 204 und/oder Rücklauf 206 können auch umschaltbar sein oder durch entsprechende Luftklappen ein- und abgeschaltet werden bzw. durch andere Leitungen umgangen werden.

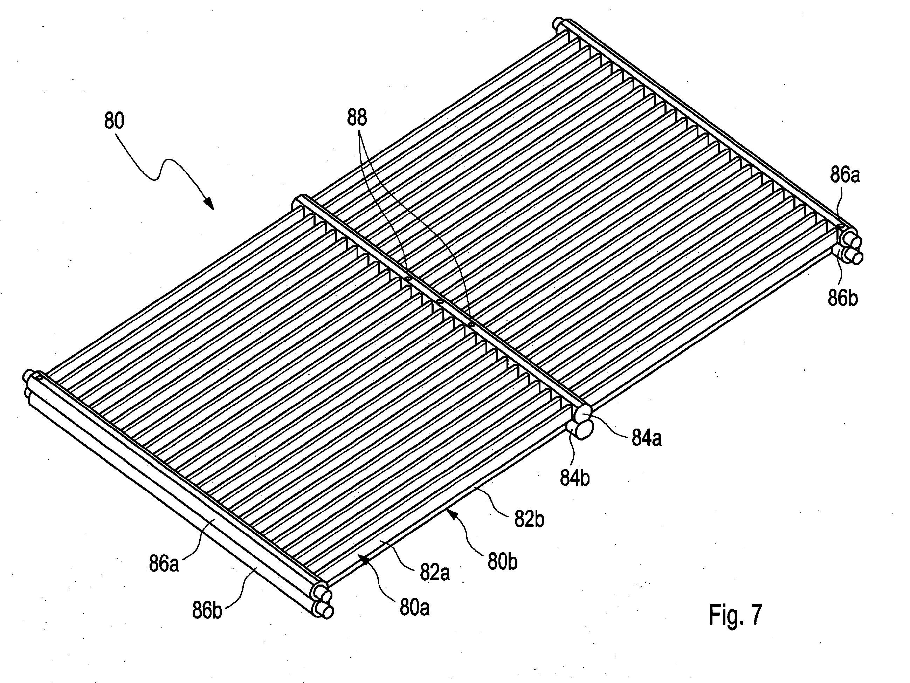

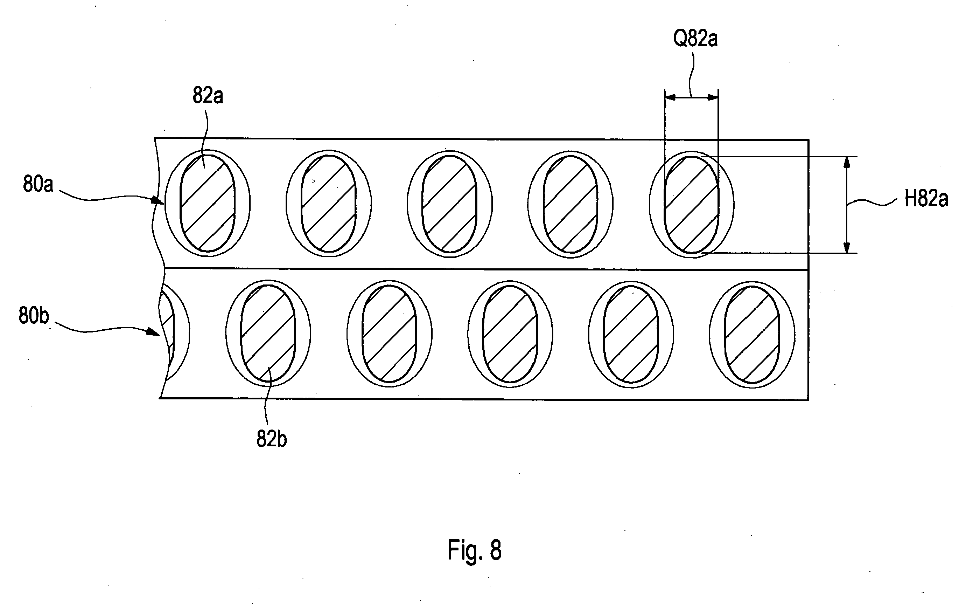

Die dritte Wärmetauscheranordnung 300 dient wie die zweite Wärmetauscheranordnung 200 zur Regeneration des Speichermediums 30 und zur Wärmezufuhr in den Speichertank 10 und weist ein flüssiges Wärmeträgermedium 302, z.B. ein Glykol-Wasser-Gemisch oder Sole auf, welches mittels einer Fördereinrichtung 320, z.B. einer Pumpe 320 umgewälzt wird. Hier wird in der Regel nur Wärmeenergie (z. B. von Solarkollektoren, Luft-Soleabsorber, Abwasserwärmetauscher, Regenwasser bzw. Regenwasserwärmetauscher und dergleichen) von einer oder mehreren Wärmequellen 80 eingetragen. Es ist jedoch möglich, die dritte Wärmetauscheranordnung 300 auch zu Kühlzwecken einzusetzen, z.B. in der warmen Jahreszeit, solange das Speichermedium 30 noch nicht völlig regeneriert ist. Die dritte Wärmetauscheranordnung 300 ist über einen Vorlauf 304 und einen Rücklauf 306 mit der Wärmequelle 80 verbunden, wobei die Pumpe 320 günstigerweise im Vorlauf 304 angeordnet ist. Gegebenenfalls kann die Strömungsrichtung in bestimmten Betriebsphasen umgekehrt werden, so dass Vorlauf 304 als Rücklauf und Rücklauf 306 als Vorlauf dient. Mit Vorteil kann die Wärmequelle 80 ein offener Kollektor 80 sein, wie im Detail in den Figuren 7 und 8 beschrieben ist.

Für eine größere Flexibilität bei der Anpassung an verschiedene Wärmequellen 80 kann die dritte Wärmetauscheranordnung 300 auch in mehrere Einheiten aufgeteilt sein, welche jeweils eigene Anschlüsse aufweisen, bzw. können mehrere dritte Wärmetauscheranordnungen 300 z.B. übereinander montiert sein.

Als weitere Möglichkeit, um den entladenen Speichertank 10 mit Energie zu beladen, kann vorgesehen sein, dass das als Speichermedium 30 dienende Wasser direkt in den Speichertank 10 eingeleitet wird, welches eine geeignete Wärmemenge zum Erwärmen des Speichermediums 30 enthält.

Grundsätzlich ist denkbar, im Energiespeichersystem 500 mehrere Speichertankeinrichtungen 600 bzw. Speichertanks 10 vorzusehen, die seriell und/oder parallel geschaltet sein können. Ebenso kann ein einzelner Speichertank 10 mit zwei oder mehr Wärmepumpen 60 gekoppelt sein, oder auch mehrere Speichertanks 10 mit einer Wärmepumpe 60. Weiterhin kann das Energiespeichersystem 500 so weitergebildet werden, dass ein Speichertank 10 mit einer Regenwasserzisterne zum Wasseraustausch gekoppelt ist. Das Energiespeichersystem 500 kann auf einfache Weise an lokale Anforderungen angepasst werden.

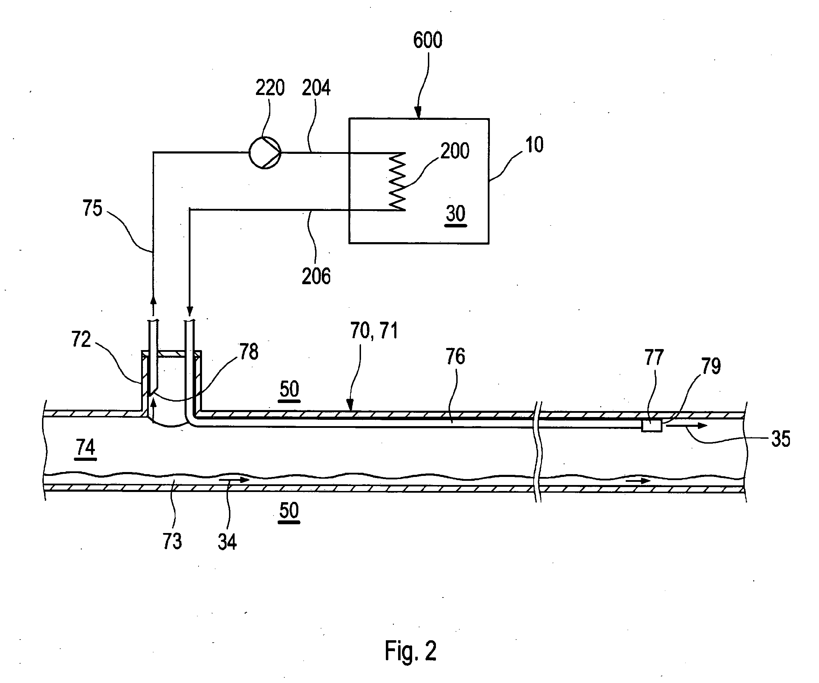

Figur 2 zeigt in einem Längsschnitt eine günstige Versorgungseinrichtung 70 in Form einer Luftquelle 70 für eine zweite Wärmetauscheranordnung 200 eines Energiespeichersystems 500, wie es in Figur 1 beschrieben ist. Die Wärme liefernde Luftquelle 70 ist in diesem Fall Kanalluft 74 eines Abwasserkanals 71, z.B. eines kommunalen Abwasserkanals. Die Kanalluft 74 über dem Abwasser 73 im Abwasserkanal 71 ist sehr feucht und relativ warm. Die Kanalluft 74 aus dem Abwasserkanal 71 wird z.B. an einem Kanalschacht 72 über eine Absaugöffnung 78 mittels einer Förderreinrichtung 220 abgesaugt und über eine Ringleitung 75 mit Vorlauf 204 und Rücklauf 206 der zweiten Wärmetauschereinrichtung 200 als Wärmeträgermedium zugeführt und über eine Rückführöffnung 79 wieder in den Abwasserkanal 71 zurückgeleitet. Es tritt keine Kanalluft 74 aus dem Abwasserkanal 71 nach außen, und eine Geruchsbelästigung der Umgebung wird vermieden, ebenso ist ein wartungsaufwändiger Geruchsfilter unnötig.

Die in der Kanalluft 74 des Abwasserkanals 71 enthaltene Luftfeuchtigkeit kondensiert in der zweiten Wärmetauschereinrichtung 200 im Speichertank 10 aus und kann dort z.B. abgepumpt und entsorgt werden. Die Kanalluft 74 gelangt getrocknet und abgekühlt wieder in den Abwasserkanal 71 zurück. Die gegenüber dem Speichertank 10 wärmere Kanalluft 74 wird direkt zur Regeneration des Speichermediums 30 verwendet. Für die Rückführung der entnommenen und abgekühlten Kanalluft 74 wird bevorzugt ein Leitungsabschnitt 76 über eine längere Wegstrecke entlang der Oberseite des Abwasserkanals 71 verlegt, welche die Kanalluft 74 ausreichend tief ins Innere des Abwasserkanals 71 zurückleitet. Die Rückleitung 76 wird bevorzugt in Richtung der Abwasserströmung verlegt (durch Pfeile 34 angedeutet). Hiermit kann ein Gefälle infolge des Dichteunterschieds der warmen und kalten Kanalluft 74 ausgenutzt werden. Dies bewirkt einen zusätzlichen Antrieb der Luftströmung, sowie eine gute Flächenverteilung nach der Rückführöffnung 79, um möglichst viel Wärme aus dem Abwasserkanal 71 aufzunehmen. Vorteilhaft ist auch, dass die zurückgeführte kalte Kanalluft 74 auf die Oberfläche des Abwassers 73 absinkt, um dort wieder Feuchtigkeit und Wärme aufzunehmen.

Statt der Rückführung kann auch nur die Ansaugung über eine längere Strecke im Abwasserkanal 71 ausgeführt sein und das Wiedereinleiten der Kanalluft 74 in oder in der Nähe des Kanalschachts 72 erfolgen. Es können aber auch sowohl der rückführende Leitungsabschnitt 76 und die Ansaugleitung in verschiedene Richtungen in den Abwasserkanal 71 verlegt werden, wobei die Kaltluftleitung bevorzugt in Richtung eines etwaig vorhandenen Kanalgefälles verlegt wird.

Der Kanalschacht 72 kann zweckmäßigerweise an seinem Kanaldeckel abgedichtet sein, wenn aufgrund der Verrohrung die Gefahr besteht, dass durch örtlichen Überdruck ein Austreten von Kanalluft 74 in die Umgebungsluft zu erwarten ist, vor allem in Wohngebieten. Durch geeignete Auslegung kann dies jedoch vermieden werden. Die Enden der im Abwasserkanal 71 verlegten Rohre können durch Gitter oder ähnliche Einrichtungen gegen Eindringen von Ratten oder anderen Tieren und gegen Fremdkörper geschützt sein. Das Ende des Leitungsabschnitts 76, der sich im Abwasserkanal 71 befindet, kann durch eine Rückschlagklappe 77 geschützt sein, die Kanalluft 74 in Strömungsrichtung 35 austreten lässt, jedoch gegen Eindringen von Abwasser 73 sperrt, wenn im Abwasserkanal 71 Hochwasser ist. So können z.B. Schlammablagerungen im Leitungsabschnitt 76 vermieden werden. Die Rückschlagklappe 77 kann über einen Schalter ein entsprechendes Signal an eine Steuereinheit melden, welche dann ggf. die Fördereinrichtung 220 in der Ringleitung 75 bei geschlossener Rückschlagklappe 77 abschaltet.

Die Kanalluft 74 aus dem Abwasserkanal 71 kann in Verbindung mit der zweiten Wärmetauscheranordnung 200 im Speichertank 10 auch auf andere Weise eingesetzt werden. Es kann z.B. ein Ansaugen von Luft aus dem Abwasserkanal 71, z.B. am Kanaldeckel, mit Durchleiten durch den zweiten Wärmetauscher 200 im Speichertank 10 und Ablassen der Kanalluft 74 ins Freie erfolgen. Alternativ kann die Kanalluft 74, z. B. zuerst durch einen Geruchsfilter geleitet und dann ins Freie abgelassen werden. Es kann alternativ auch ein Ansaugen von Kanalluft 74 erfolgen, jedoch z.B. aus einer Verbindungsleitung zwischen einem Gebäude und einer (öffentlichen) Abwasser-Sammelleitung (Kanalisation) und die Kanalluft 74 wieder in die Verbindungsleitung mit oder ohne Geruchsfilter abgelassen werden.

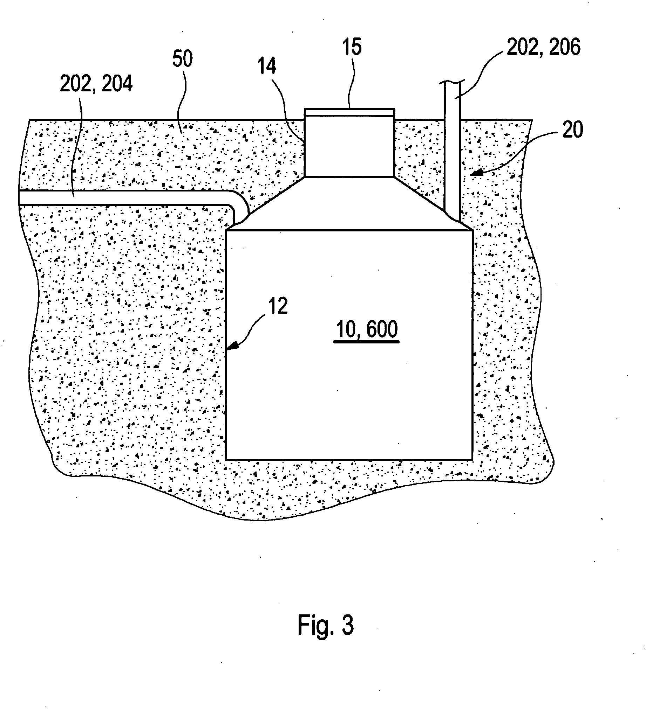

Um eine unerwünschte Rezirkulation von Kanalluft 74 im gleichen Kanalabschnitt des Abwasserkanals 71 zu vermeiden, können bei entsprechenden Gegebenheiten auch zwei weiter auseinander liegende Kanalabschnitte für die Absaugöffnung 78 und Rückführöffnung 79 der Kanalluft 74 benutzt werden, indem die Zuführung und Entnahme von Kanalluft 74 an weit voneinander entfernten Stellen desselben Abwasserkanals 71 vorgenommen wird. Falls Rohre, die Kanalluft 74 zum Speichertank 10 führen, im Erdreich 50 verlegt sind, wie z.B. in Figur 3 beispielhaft dargestellt ist, können diese gegebenenfalls zusätzlich Erdwärme aufnehmen oder Wärmeenergie im Erdreich 50 zwischenspeichern. Bei einer Verlegung an der Luft ist eine Isolierung der Wärme führenden Zuleitungen zum Speichertank 10 sinnvoll.

Figur 3 zeigt in einer Seitenansicht eine beispielhafte Ausgestaltung einer Speichertankeinrichtung 600 mit einem Speichertank 10 in einer Einbausituation im Erdreich 50. Die Einbautiefe des Speichertanks 10 ist gering, der Speichertank 10 ist in Erdbodennähe angeordnet. Im oberen Bereich 20 seines Gehäuses 12 ist ein zylinderförmiger Stutzen 14 mit geringerem Durchmesser angeformt, der z.B. zu Wartungs- und Inspektionszwecken geöffnet werden kann. Eine Grundwasserberührung des Speichertanks 10 ist für seine Funktion nicht notwendig, jedoch kann sich ein Untergrund mit leicht fließendem Grundwasser auf die Regeneration des Speichermediums 30 durch die vom Grundwasser auf die Außenseite des Gehäuses 12 zugeführte Wärme positiv auswirken, da der Speicherinhalt meistens kälter als das Grundwasser ist und strömendes Grundwasser dem Speichertank 10 laufend neue Wärme zuführen kann.

Das Gehäuse 12 kann als Hohlkörper beliebigen Querschnitts, etwa in Form eines Hohlzylinders oder eines Quaders, ausgebildet sein. Damit wird eine besonders einfache und zuverlässige Montage der Wärmetauscheranordnungen 100, 200, 300 ermöglicht. Denkbar sind jedoch durchaus auch andere Formen, die der Fachmann nach Bedarf auswählen wird. Ein günstiges Material für das Gehäuse ist z.B. Stein, Beton oder auch Kunststoff. Da der Speichertank 10 keine große Mindesteinbautiefe benötigt, kann das Gehäuse 12 zweckmäßigerweise so ausgestaltet sein, dass es befahrbar oder begehbar ist. Die Größe des Gehäuses 12 kann an den jeweiligen Bedarf angepasst sein. Dazu kann bei größeren Durchmessern des Gehäuses 12 aus statischen Gründen auch eine Stützstrebe angeordnet sein, um z.B. ein Fahrzeuggewicht tragen zu können.

Der Speichertank 10 kann in der Art einer Regenwasserzisterne ausgebildet sein, die z.B. in einem Betonwerk gegossen oder in einer Formpresse aus Kunststoff hergestellt wird. Querschnitt und Form des Speichertanks 10 können beliebig gewählt werden, wie gerade benötigt, etwa als Zylinder, Quader, Kugel oder dergleichen.

Der Speichertank 10 kann einbaufertig samt Wärmetauscheranordnungen 100, 200, 300 zum Einbauort geliefert werden und muss dort lediglich mit den entsprechenden Versorgungsleitungen für die verschiedenen Wärmeträgermedien, Fördereinrichtungen, Wärmequellen, Verbrauchern etc. verbunden werden. Beispielhaft ist eine Anschlussart dargestellt, bei der der Vorlauf 204 der zweiten Wärmetauschereinrichtung 200 eine Strecke im Erdreich 50 geführt ist, während der Rücklauf 206 nach oben geführt ist. Selbstverständlich können auch andere Anordnungen von Vorlauf 204 und Rücklauf 206 vorgesehen sein, etwa eine zentrale Zuführung von oben durch den Stutzen 14.

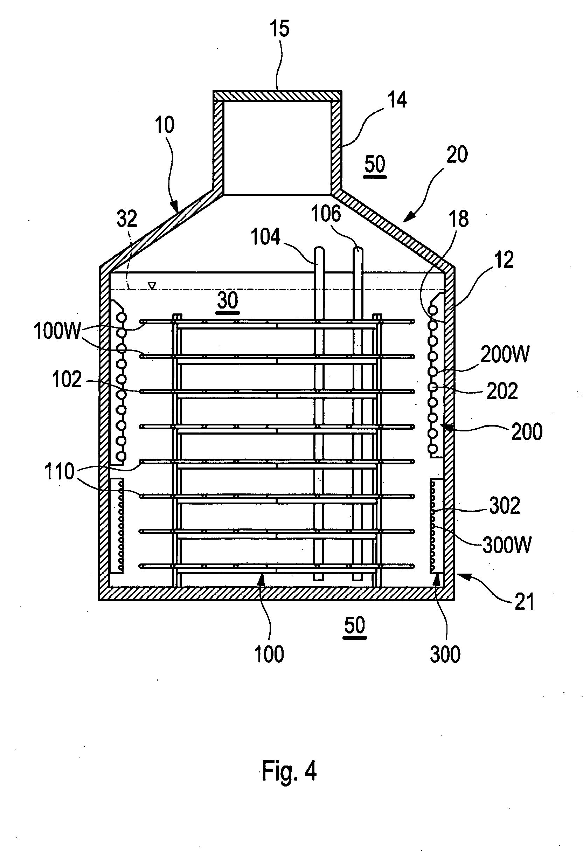

Figur 4 zeigt eine Ansicht eines aufgeschnittenen Speichertanks 10 in einer günstigen Ausgestaltung mit drei Wärmetauscheranordnungen 100, 200, 300. Die erste Wärmetauscheranordnung 100 umfasst Wärmetauscherrohre 100W, vorzugsweise in Form von Rohr- oder Schlauchwicklungen. Die Wärmetauscherrohre 100W können im Wesentlichen einlagig oder auch mehrlagig ausgebildet und in axial voneinander beabstandeten Ebenen 110 übereinander gestapelt. Das Material der Wärmetauscherrohre 100W kann beliebig sein, etwa Metall oder Kunststoff; als preiswertes und dauerhaftes Material wird bevorzugt Polyethylen (PE) eingesetzt. Die axial beabstandeten Ebenen 110 können vorteilhaft über als Verteiler oder Sammler wirkende Versorgungsrohre 104, 106 strömungstechnisch parallel vom Wärmeträgermedium 102 durchströmbar sein. Dabei können alle Ebenen 110 gleichzeitig durchströmt werden. Optional können auch nur einige ausgewählte der Ebenen 110 durchströmt werden. Durch das Zuschalten der anderen Ebenen 110 kann der Speichertank 10 kurzzeitig eine deutlich erhöhte Wärmemenge zur Verfügung stellen.

Die Wärmetauscherrohre 100W können vorzugsweise U-förmig als Doppelspirale pro Ebene 110 auf einem speichenradähnlichen Montagegestell aufgewickelt sein, wobei die Basis der Doppelspirale zentral angeordnet ist und die beiden Enden der Doppelspirale sich am äußeren Umfang der Ebene 110 bzw. dem speichenradähnlichen Montagegestell befinden und z.B. zu einem Ventil oder Leitungsanschluss außerhalb des Speichertanks 10 geführt sind.

Die Gefahr einer Sprengwirkung auf das Gehäuse 12 beim Einfrieren des Speichermediums 30 kann reduziert werden, wenn die Wärmetauscherrohre 100W in jeder Ebene 110 so gewickelt sind, dass in einem inneren, zentralen Bereich ein geringerer Abstand eingestellt ist zwischen den im Wesentlichen konzentrischen Wicklungen als in einem umfangsnahen Bereich der Ebenen 110. Benachbarte Spiralarme werden jeweils in entgegengesetzten Fließ- bzw. Drehrichtungen mit dem ersten Wärmeträgermedium durchströmt, was die Temperatur im Speichermedium 30 homogenisiert. Vorteilhafterweise können die Ebenen 110 analog von unten nach oben in größer werdenden Abständen angeordnet sein. Zusätzlich kann über der obersten Ebene 110 ein ausreichender Luftraum oder ein nicht zur Erstarrung vorgesehener Höhenbereich von Speichermedium 30 vorgesehen sein, damit sich das Speichermedium 30 beim Erstarren problemlos ausdehnen kann. Denkbar ist auch, die Dichte der Wärmeübertrager 100W zu erhöhen und eine Ebene 110 mit mehr als einer Lage des Wärmeübertragers 100W zu belegen, etwa zu beiden Seiten der jeweiligen Ebene 110, oder auch zwei oder mehr Lagen pro Seite der Ebene 110. Die Wärmeübertrager 100W können als flache Spiralen in jeder dieser Lagen angeordnet sein, oder auch ineinander übergehend gewickelt sein, so dass für eine Doppellage oder Mehrfachlage von Wärmeübertragern 100W nur zwei Anschlüsse benötigt werden.

Das Gehäuse 12 kann mit einer oder mehreren Montagefugen geteilt und zerlegbar sein, um einzelne oder auch gleich mehrere Wärmeübertrager 100W in das Gehäuse 12 als vorgefertigte Einheiten einbauen zu können. Alternativ kann zum Einbau der vorgefertigten Wärmeübertrager 100W auch ein abnehmbarer Deckel 15 mit großer Fläche auf dem Gehäuse 12 vorgesehen sein, der ein Absenken der Wärmeübertrager 100W in das Gehäuse gestattet.

Die zweite Wärmetauscheranordnung 200 umgibt in diesem Ausführungsbeispiel die erste Wärmetauscheranordnung 100 in ihrem axial oberen Bereich koaxial und ist z. B. an oder nahe einer Innenseite 18 des Gehäuses 12 des Speichertanks 10 angeordnet. Die zweite Wärmetauscheranordnung 200 besteht aus axial beabstandeten Rohren oder Schläuchen, insbesondere Wellschläuchen, die als Wärmeübertrager 200W dienen und der Kontur der Innenseite 18 des Gehäuses 12 folgen. Günstig ist, ein Gefälle der Wärmeübertrager 200W zwischen Vorlauf 204 und Rücklauf 206 zweiten Wärmetauscheranordnung 200 vorzusehen, damit im Wärmeträgermedium 202 auskondensierende Flüssigkeit gesammelt und abgeführt werden kann.

Im gezeigten Ausführungsbeispiel axial unterhalb der zweiten Wärmetauscheranordnung 200 ist in einem unteren Bereich 21 des Speichertanks 10 ist die optionale dritte Wärmetauscheranordnung 300 angeordnet, welche ebenfalls die erste Wärmetauscheranordnung 100 konzentrisch mit als Wärmeübertrager 300W dienenden gewundenen und axial beabstandeten Schläuchen oder Rohren umgibt. Die mit Gas arbeitende Wärmetauscheranordnung 200 des Speichertanks 10 weisen typischerweise nicht den gleichen Rohrdurchmesser oder die gleichen Abmessungen der jeweiligen Wärmeübertrager 200W auf wie die mit flüssigem Wärmeträgermedien 102, 302 betriebenen Wärmetauscheranordnungen 100, 300, sondern sind größer als diese. Typischerweise können die Wärmeübertrager 200W z. B. einen deutlich größeren Durchmesser als die Flüssigkeit führenden Wärmeübertrager 100W, 300W aufweisen.

Bei Gehäusen 12 mit kreisrundem Grundriss sind die Wärmeübertrager 300W vorzugsweise in Form einer oder mehrerer Rohrwindungen (mit Gefälle) ausgeführt, die nahe der Innenseite 18 des Gehäuses entlang als Schraubenkurve verlaufen, wie in der Figur 4 angedeutet. Bei Gehäusen mit eckigen Wänden ist die Anordnung der Wärmeübertrager 300W im Abstand zu einer Innenwand vorzugsweise so, dass die einzelnen Abschnitte der Wärmeübertrager 300W ein Gefälle in die gleiche Richtung aufweisen. Ein gleichmäßiges Gefälle stellt sicher, dass eine möglichst einfache Entlüftung des Wärmeübertragers 300W beim Befüllen mit dem dritten Wärmeträgermedium 302 gewährleistet ist.

Die zweite und dritte Wärmetauscheranordnung 200 und 300 ist jeweils vorzugsweise in den spät oder gar nicht vereisenden bzw. erstarrenden Zonen des Speichermediums 30 im Speichertank 10 untergebracht, jedoch so, dass möglichst wenig zusätzlicher Platz dafür verbraucht wird. Damit ergibt sich ein sehr kompakter Speichertank 10.

Grundsätzlich ist es denkbar (zeichnerisch nicht dargestellt), dass ein rundes oder zylindrisches Gehäuse 12 auch in einer Einbaulage mit liegender statt vertikaler Achse als Speichertank 10 verwendet wird, wobei die einzelnen Wärmetauscheranordnungen 100, 200 und 300 dann entsprechend im Raum gedreht positioniert sind. Dies ist dann sinnvoll, wenn das Gehäuse 12 aus Kunststoff und aus zwei halbzylinderähnlichen, größeren Grundformen besteht, die im zusammen montierten Zustand eine horizontale Teilungsfuge bilden, weil dann die leere obere Halbschale des Gehäuses 12 von oben auf die untere Halbschale, die mit Wärmetauscheranordnungen 100, 200 und 300 schon vormontiert sein kann, mit einem Hebemittel herabgelassen und mit ihr zu einer Einheit zusammengefügt werden kann.

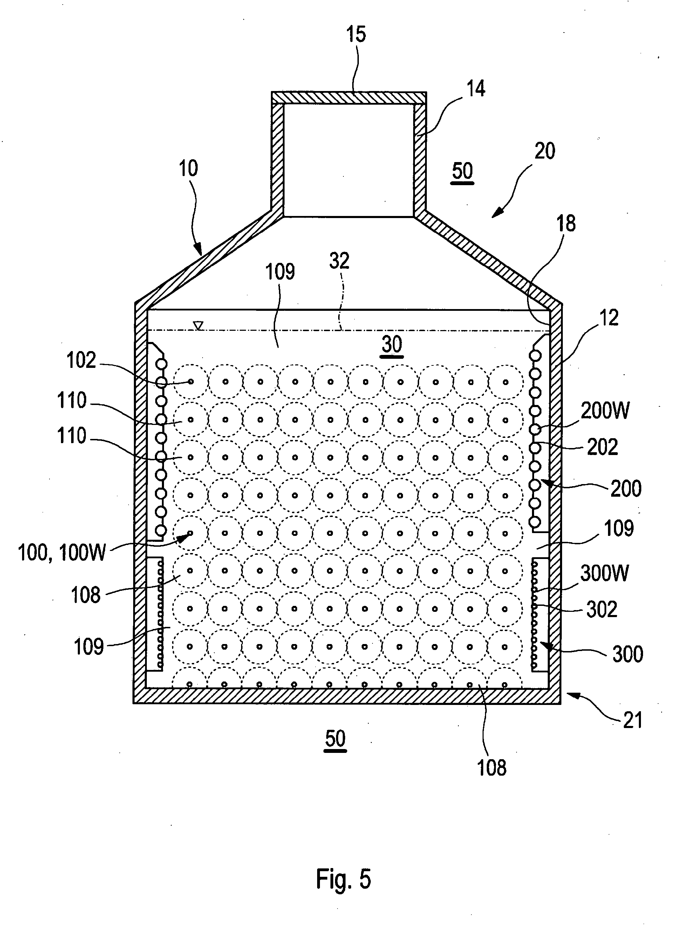

Das der zweiten Wärmetauscheranordnung 200 im Speichertank 10 als Wärmeträgermedium 202 zugeführte Gas, beispielsweise Luft, gibt seine Wärmeenergie an das Speichermedium 30, z.B. Wasser. Das Eis bildet sich als feste Phase 108 nach und nach als so genannte Eispelze in runder Form um die Wärmeübertrager 100W der ersten Wärmetauscheranordnung 100 in der flüssigen Phase 109 des Speichermediums 30 aus, wie in Figur 5 angedeutet ist. Um vorübergehend eine höhere Regenerations- oder Entzugsleistung zu erreichen als bei gewöhnlicher Beschaltung, können die Wärmetauscheranordnungen 100 und 300 zeitweilig durch Schaltmittel auch zu einer Einheit zusammengeschaltet werden, vorausgesetzt, dass sie das gleiche Wärmeträgermedium verwenden. Insbesondere, wenn der Speichertank restlos energetisch entleert ist und das Speichermedium 30 bereits deutlich über die Schmelztemperatur des Speichermediums 30 erwärmt wurde, könnte dadurch z.B. eine entnehmbare Kühlleistung gesteigert werden, um die restliche Kühle im Speichertanks 10 trotz geringer Temperaturspreizung noch gut ausnutzen zu können.

Die in den Speichertank 10 eingebauten wärmeübertragenden Bauelemente der Wärmetauscheranordnungen 100, 200, 300 sind unterhalb eines Pegels 32 des Speichermediums 30 bzw. innerhalb des Speichermediums 30 angeordnet. Die unterschiedlichen Wärmetauscheranordnungen 100, 200, 300 wirken jeweils einzeln auf das Speichermedium 30, nicht jedoch unmittelbar von einer Wärmetauscheranordnung 100, 200, 300 auf eine andere, sondern insofern nur mittelbar über das Speichermedium 30.

Durch die günstige Anordnung der Wärmetauscheranordnungen 100, 200, 300 wird weitgehend sichergestellt, dass das bei Entladung des Speichertanks 10 anwachsende Volumen des erstarrten Speichermediums 30 sich in seiner Gesamtheit möglichst innerhalb bestimmter maximaler räumlicher Grenzen befindet, die in der Figur 5 durch feste und flüssige Phasen 108 und 109 in etwa angedeutet sind. Bevorzugt befinden sich die zweite und die dritte Wärmetauscheranordnung 200 und 300 in einem Raumbereich, der im gewöhnlichen Betriebsfall von flüssigem Speichermedium 30 angefüllt ist. Die Gesamtmasse des erstarrten Speichermediums 30 wird somit
im normalen Betriebsfall soweit wie möglich von einem vor Ausdehnungsdruck schützenden Flüssigkeitsbereich 109 umgeben, zumindest im Außenwandbereich des Gehäuses 12 und unterhalb des Pegels 32. Selbstverständlich können die zweite und die dritte Wärmetauscheranordnung 200 und 300 nach Belieben auch anders im Speichertank 10 angeordnet sein.

Ferner kann eine Ebene 110 der ersten Wärmetauscheranordnung 100 auch direkt auf dem Boden des Speichertanks 10 montiert sein. Die flüssige Fluide als Wärmeträgermedium 302 führende (Neben-) Wärmetauscheranordnung 300 kann ebenso wie die gasbetriebenen Wärmtauscheranordnungen 200 zu bestimmten Jahres- oder Betriebszeiten zu Kühlzwecken verwendet werden.

Falls z. B. das Kühlen mit Hilfe des entladenen oder teilentladenen Speichertanks 10 zeitweise im Vordergrund steht und die Kälte im Speichertank 10 dafür möglichst lange bewahrt werden soll, kann das Gehäuse 12 auch thermisch isoliert sein, z. B. durch das Anbringen einer Perimeterdämmung. Bei einem isolierten Gehäuse 12, in das Erdwärme kaum eindringt, ist es zweckmäßig, dass bei Energieentzug aus dem Speichertank 10 stets genügend Wärme über die Regenerations-Wärmetauscheranordnungen 200, 300 in den Speichertank 10 eingetragen wird, um eine übermäßige Eisbildung bzw. übermäßige Bildung von erstarrtem Speichermedium 30 zu verhindern.

Anschlussleitungen zu den Wärmetauscheranordnungen 100, 200, 300 können an sich an beliebiger Stelle durch den Speichertank 10 geführt sein. Diese werden zweckmäßigerweise so geführt, dass sich ein möglichst geringer Wärme- bzw. Energieverlust ergibt und keine thermischen Kurzschlüsse zwischen benachbarten Systemkomponenten auftreten, was sich z.B. durch entsprechende Abstände oder Isolierungen erreichen lässt.

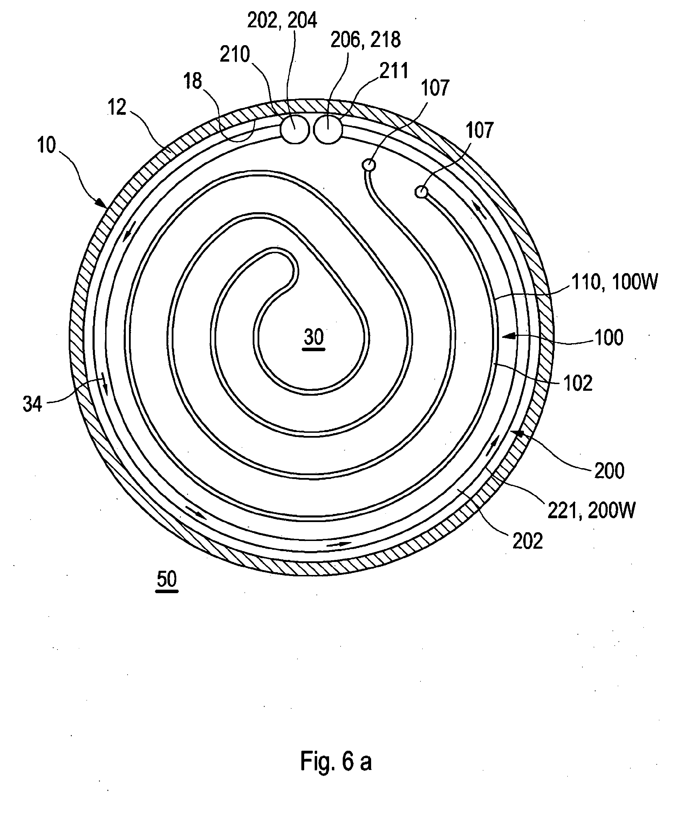

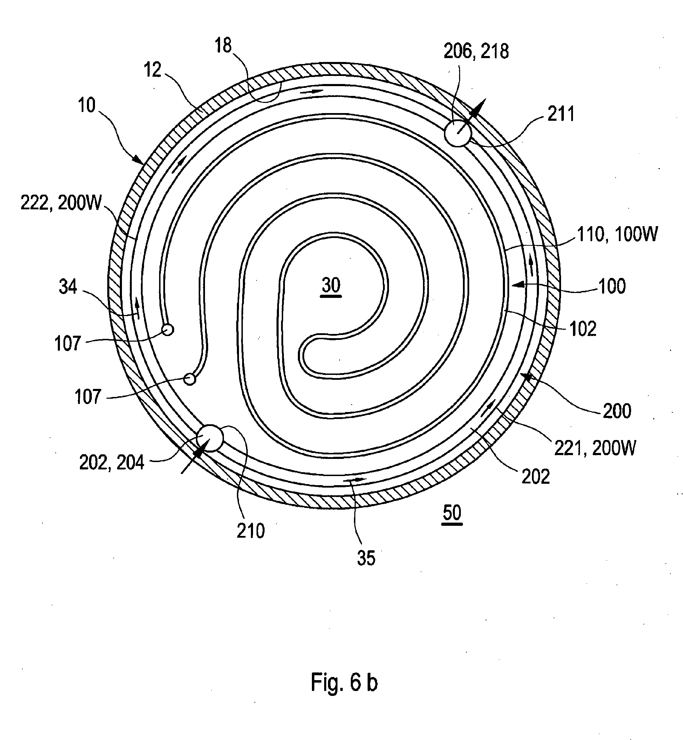

Die Figuren 6a und 6b zeigen beispielhaft eine Draufsicht auf eine Ebene 110 einer ersten Wärmetauscheranordnung 100 eines Speichertanks 10 entsprechend der Figuren 4 und 5, mit unterschiedlichen Anordnungen einer diese koaxial umgebende zweiten Wärmetauscheranordnung 200, die mit dem Wärmeträgermedium 202 betrieben ist. Die Wärmeübertrager 200W der zweiten Wärmetauscheranordnung 200 sind wie die der ersten Wärmetauscheranordnung 100 in axialen beabstandeten Ebenen angeordnet.

Jeder Wärmeübertrager 200W der zweiten Wärmetauscheranordnung 200 in Fig. 6a hat hier knapp eine Windung, bezogen auf den inneren Umfang des Gehäuses 12. Einzelne oder alle Wärmeübertrager 200W können aber auch mehr als eine Windung aufweisen (z.B. 2 Windungen oder 2,5 Windungen) oder einen Bruchteil von einer Windung (z.B. 0,5 Windungen).

Allgemein können bei nicht kreisrunden Gehäuseformen die Windungsverhältnisse der zweiten Wärmetauscheranordnung 200 auf den Umfang der Gehäuse analog angewandt werden, z.B. wenn diese einen Rechteck-, quadratischen oder polygonartigen Grundriss haben. Die Wärmeübertrager 200W sind zum einfachen Transport und zur einfachen Verarbeitung bevorzugt flexibel (z. B. flexible Wellrohre oder Wellschläuche), welche dementsprechend an die jeweilige Form eines Gehäuses 12 angepasst verlegt werden können. Eine günstige Windungslänge eines Wärmeübertragers W200 einer zweiten Wärmetauscheranordnung 200 zwischen zwei als Vorlauf 204 und Rücklauf 206 dienenden Anschlussrohren beträgt weniger als einen Innenumfang des Gehäuses 12, wenn die Wärmeübertrager 200W nahe der vertikalen Gehäusewand entlang verlegt werden.

Der Wärmeübertrager 100W auf dieser Ebene 110 ist in Spiralform auf einem z. B. speichenradähnlichen Montagegestell angeordnet, die sich um inneren Bereich des Gehäuses 12 befindet. Anschlüsse 107 für Vorlauf 104 und Rücklauf 106 sind am Außenrand der Ebene 110 angeordnet.

Nahe der Innenseite 18 des Gehäuses 12 ist zwischen dem Gehäuse 12 und der ersten Wärmetauscheranordnung 100 die zweite Wärmetauscheranordnung 200 mit rohr- oder schlauchförmigen Wärmeübertragern 200W angeordnet, von denen in Draufsicht ein Wärmeübertrager 200W in einer Ebene 110 zu sehen ist, bzw. ein oder mehrere einzelne Leitungsabschnitte 221 zu sehen sind. Halterungen und andere Details sind in der Darstellung der Übersichtlichkeit wegen weggelassen.

Die einzelnen Wärmeübertrager 200W bzw. ihre Leitungsabschnitte 221 stoßen jeweils in die als vertikale Anschlussrohre ausgebildeten Vorlauf 204 und Rücklauf 206, die nebeneinander im Speichertank 10 angeordnet sind und größere Durchmesser als der Wärmeübertrager 200W der zweiten Wärmetauscheranordnung 200 aufweisen. Die Wärmeübertrager W200 stoßen in jeder Ebene in Vorlauf 204 und Rücklauf 206. Zu- und Abluft werden nach oben in weiterführende Leitungen bzw. ins Freie geführt. Der Strömungsweg des Wärmeträgermediums 202 in einer Ebene entspricht nahezu einem Innenumfang des Gehäuses 12, so dass zwischen Vorlauf 204 und Rücklauf 206 eine relativ große Temperaturspreizung auftreten kann. Der Verteiler 210 verteilt den Vorlauf 204 des Wärmeträgermediums 202 in einzelne Wärmeübertrager 200W und der Sammler 211 führt die Einzelströmungen 34 wieder zusammen in den Rücklauf 206.

Figur 6b zeigt eine Variante, bei der Vorlauf 204 und Rücklauf 206 sich im Speichertank 10 diametral gegenüberliegen. Der Strömungsweg des Wärmeträgermediums 202 entspricht nahezu einem halben Innenumfang des Gehäuses 12, wobei die Strömungsrichtung auf jedem halben Innenumfang gleichgerichtet ist, so dass zwischen Vorlauf 204 und Rücklauf 206 ein geringerer Gesamtströmungswiderstand auftritt als in der Ausgestaltung in Figur 6a, was z.B. die benötigte Förderenergie für das Wärmeträgermedium 202 reduziert. Die zweite Wärmetauscheranordnung 200 kann nahezu beliebige alternative Ausgestaltungen haben, wobei eine große Gestaltungsfreiheit herrscht. Die Anschlussrohre können eng benachbart sein, mit mehr oder weniger großem Abstand am Innenumfang des Gehäuses beabstandet sein, sich diametral gegenüberliegen und dergleichen mehr. Die konkreten Ausgestaltungen können z.B. entsprechend eines gewünschten Strömungswiderstands in der zweiten Wärmetauscheranordnung 200 und dergleichen ausgewählt und für verschiedene Einsatzzwecke optimiert werden.

Die Wärmeübertrager 200W sind bevorzugt mit Wellrohren oder Wellschläuchen ausgeführt, z.B. aus PE. Die Anordnung kann mit einer oder mehreren Windungen der Wärmeübertrager 200W nahe der Gehäusewand entlang verlaufen, z. B. mit nur einer Windung wie dargestellt. Ihre Auftriebskraft im flüssigen Speichermedium 30 kann durch eine Befestigung abgefangen werden. Die Strömungsrichtung 34 des Wärmeträgermediums 202 ist durch Pfeile angezeigt und verläuft bevorzugt in Richtung eines Sammelbereichs für Kondensat 218, der sich bevorzugt im als Sammelrohr dienenden Rücklauf 206 unten befindet. In einem solchen Sammelbereich oder Pumpensumpf 218 kann das anfallende Kondensat, zumeist Kondenswasser, dann mittels einer Pumpe abgezogen werden. Das Kondensat kann bei Bedarf, d. h. bei hohem Kondensatpegel, mit Hilfe einer Pegelmesseinrichtung in Verbindung mit einer Schalteinrichtung zum Ein- und Ausschalten einer vorzugsweise elektrisch betriebenen Pumpe (nicht dargestellt) automatisch nach außen abgepumpt werden. Die Pumpe kann z.B. mit einer nach außen gelegten Druckleitung in den Sammelbereich 218 integriert oder außerhalb des Sammelbereichs 218 mit einer in den Sammelbereich 218 geführten Saugleitung angeordnet sein. Die Wärmeübertrager 200W und andere Teile der zweiten Wärmetauscheranordnung 200 sind z.B. (direkt) an der Gehäusewand des Speichertanks 10 befestigt, wie in Figur 4 dargestellt, beispielsweise mit Hilfe von Befestigungsschienen, welche Klemmvorrichtungen für den Rohrdurchmesser der Wärmeübertrager 200W aufweisen oder können beispielsweise an der Außenseite einer innen im Speichertank 10 befindlichen Gestellkonstruktion befestigt sein.

Figur 7 zeigt einen vorteilhaften Kollektor 80, der als Versorgungseinrichtung bzw. Wärmequelle 80 insbesondere der dritten Wärmetauscheranordnung 300 dienen kann. Der Kollektor 80 weist eine Grundfläche auf, die Wärme aus der Umgebung und aus Sonneneinstrahlung aufnimmt. Der Kollektor 80 kann eine oder mehrere Ebenen 80a, 80b umfassen. Im Beispiel sind zwei übereinander angeordnete Ebenen 80a, 80b gezeigt, bei denen die Leitungen 82a in einer der Ebenen 80a jeweils versetzt zu den Leitungen 80b der anderen Ebene 80b angeordnet sind. Stirnseitig ist auf jeder Seite ein Verteilerbereich 86 angeordnet, wobei sich die Leitungen 82a, 82b zwischen den Verteilerbereichen 86 erstrecken. Ein Medium, das in den Leitungen 82a bzw. 82b fließt, gelangt über den jeweiligen Verteilerbereich 86 in die benachbarten Leitungen 82a bzw. 82b derselben Ebene 80a bzw. 80b.

Zwischen den äußeren Verteilerbereichen 86a, 86b ist mittig ein weiterer Verteilerbereich 84a, 84b angeordnet. Im mittigen Verteilerbereich 84a, 84b sind beispielsweise symmetrisch zur Mitte zwei Bohrungen 88 angeordnet, die zur Befestigung des Kollektors 80 dienen. Durch die fast zentrische Befestigung des Kollektors 80 auf einem Untergrund, beispielsweise auf einem Dachrahmen, kann eine Längenänderung der Leitungen 82a, 82b in praktisch alle Richtungen kompensiert werden. Der Kollektor 80 benötigt keine weiteren Befestigungspunkte und ist quasi schwimmend gelagert.

Der Kollektor 80 ist ein offenes System, d.h. die vorzugsweise als Kunststoffrohre oder Kunststoffschläuche ausgebildeten Leitungen 82a, 82b des Kollektors 80 sind unmittelbar der Umgebung ausgesetzt. Ist der Kollektor 80 an die dritte Wärmetauscheranordnung 300 angekoppelt, kann das (flüssige) Wärmeträgermedium 302 durch die Leitungen 82a, 82b fließen und Wärme aus der Luft oder aus Sonneneinstrahlung aufnehmen. Diese Wärme kann z.B. mittels einer Umwälzpumpe dem Speichertank 10 (Fig. 1) zugeführt werden. Bei dem Kollektor 80 handelt sich um einen Absorber, der Sonnenlicht in Wärme umwandelt. Darüber hinaus wird auch ohne Sonneneinstrahlung Wärme der Luft aufgenommen, da der Kollektor 80 durch die Kopplung an den Speichertank 10 über lange Zeiträume mit einem Medium (Wärmeträgermedium 302) kälter als die Umgebungsluft durchströmt wird. Die Konstruktion kann komplett aus Kunststoff hergestellt sein und preiswert beispielsweise im Rotationsgussverfahren gefertigt werden. Der Kollektor 80 kann z.B. mit einem Wasser/Glykol-Gemisch als Wärmeträgermedium betrieben werden, das zwischen Kollektor 80 und Wärmetauscheranordnung 300 im Speichertank 10 zirkuliert. Die Umwälzpumpe wird bevorzugt betrieben, wenn im Winter die Temperatur des Speichertanks 10 niedriger ist als die Temperatur im Kollektor 80, welche in etwa der Außentemperatur entspricht. Soll im Sommer gekühlt werden, wird gegen Ende der Heizperiode die Regeneration unterbunden, um ein ungewolltes Abtauen des Speichermediums (z.B. Eis) zu vermeiden.

Einen besonderen Vorteil bei der Kombination des Kollektors 80 mit dem Speichertank 10 bzw. Speichertankeinrichtung 600, insbesondere in Form eines Eisspeichers, stellt die lange Laufzeit der Regeneration des Speichrmediums 30 (Figur 1) dar. Selbst wenn die Wärmepumpe 60 (Figur 1) während der Übergangszeit nur wenige Stunden pro Tag in Betrieb ist und dem Speichertank 10 Wärme entzieht, kann der Kollektor 80 über 24 Stunden am Tag die Wärme der Umgebung in den Speichertank 10 einspeisen. Diese lange Laufzeit (selbst bei "Nacht und Nebel") ergibt in der Summe eine extrem hohe Energiedichte, die deutlich höher liegt als die der besten zurzeit auf dem Markt befindlichen Vakuumröhrenkollektoren.

Figur 8 zeigt in einer Schnittansicht durch den Kollektor 80 den Querschnitt der Leitungen 82a, 82b, welche einen ovalen Querschnitt aufweisen, wobei eine Hochachse H82a des Querschnitts größer ist als eine Querachse Q82a (nur ein Querschnitt der oberen Kollektorebene 80a ist mit Bezugszeichen bezeichnet). Durch die elliptische Form der Leitungen 82a, 82b wird deren Oberfläche maximiert, was vorteilhaft für die Leistungsfähigkeit des Kollektors 80 ist, da eine hohe Dichte von Kollektorleitungen 82a, 82b in der Grundfläche des Kollektors 80 untergebracht werden kann. Entsprechend der Zahl der Ebenen 80a, 80b kann die wirksame Kollektoroberfläche bei gleichbleibender Grundfläche vergrößert werden. Die Leitungen 82a, 82b der einzelnen Ebenen 80a, 80b können je nach Anwendungsfall direkt hintereinander oder versetzt zueinander angebracht werden, was ein Durchscheinen der Sonne auf die untere Ebene 80b ermöglicht. Durch diese Anordnung kann sich ein zylindrischer Eispanzer um die Leitungen 82a, 82b bilden, der bis zu einem gewissen Ausmaß den nächsten Eispanzer nicht berührt. Wie bei der Speichertankeinrichtung 600 wird dadurch, selbst bei Eisbildung, ein Rückgang der Entzugsleistung vermieden.

Der Kollektor 80 kann mittels eines Ventils (nicht dargestellt) auch durch die Wärmepumpe direkt angefahren werden, was bis zu einer Außentemperatur von ca. 0°C eine ausreichende Entzugsleistung für die Wärmepumpe 60 (Figur 1) liefert und den Speichertank 10 somit entlastet. Die Energie des Speichertanks 10 kann dadurch für kältere Temperaturen "aufgehoben" werden.

Vorteilhaft kann gemäß der Erfindung ein Speichertank 10 und ein Energiespeichersystem 500 geschaffen werden, mit dem Energie insbesondere aus Luftwärmequellen beliebiger Herkunft mit nur geringer Umwälzenergie in einen ansonsten z.B. solebetriebenen Latentspeicher eingebracht werden kann, um eine weitgehende Nutzung von kostengünstiger Energie mit relativ einfachen Mitteln zu ermöglichen.

## Patentansprüche

1. Speichertankeinrichtung (600) für ein Energiespeichersystem (500), umfassend wenigstens einen Speichertank (10) mit einem Gehäuse (12), enthaltend ein Speichermedium (30) und wenigstens eine erste Wärmetauscheranordnung (100) in Kontakt mit dem Speichermedium (30), wobei das Speichermedium (30) einen Phasenübergang mit Latentwärme aufweist, wobei die wenigstens erste Wärmetauscheranordnung (100) ein erstes Wärmeträgermedium (102) aufweist, und wobei innerhalb des Gehäuses (12) eine zweite Wärmetauscheranordnung (200) mit einem zweiten Wärmeträgermedium (202) und wenigstens eine dritte Wärmetauscheranordnung (300) mit einem dritten Wärmeträgermedium (302) angeordnet ist, wobei
- die erste Wärmetauscheranordnung (100) dazu vorgesehen ist, in einer Entzugsperiode Wärme aus dem Speichermedium (30) bis zur thermischen Entladung zu entziehen;
- die zweite Wärmetauscheranordnung (200) und die dritte Wärmetauscheranordnung (300) zur Wärmezufuhr in das Speichermedium vorgesehen sind; und
- die erste Wärmetauscheranordnung (100) zentral im Gehäuse (12) angeordnet ist und axial übereinander angeordnete Ebenen (110) mit spiralförmig angeordneten Wärmetauscherrohren (100W) umfasst, wobei die zweite Wärmetauscheranordnung (200) und die dritte Wärmetauscheranordnung (300) die erste Wärmetauscheranordnung (100) umgeben und die zweite Wärmetauscheranordnung (200) und/oder die dritte Wärmetauscheranordnung (300) zumindest bereichsweise an oder nahe einer Innenseite (18) des Gehäuses (12) in spät oder gar nicht erstarrenden Zonen des Speichermediums (30) und/oder zumindest bereichsweise in einer Gehäusewand angeordnet sind.

2. Speichertankeinrichtung nach Anspruch 1, **dadurch gekennzeichnet, dass** die zweite Wärmetauscheranordnung (200) bereichsweise innerhalb der ersten Wärmetauscheranordnung (100) angeordnet ist.

3. Speichertankeinrichtung nach einem der vorhergehenden Ansprüche, **dadurch gekennzeichnet, dass** das zweite Wärmeträgermedium (102) Luft ist, insbesondere Umgebungsluft und/oder Abwasserkanalabluft und/oder Gebäudeabluft, besonders bevorzugt feuchtebeladene Luft.

4. Speichertankeinrichtung nach einem der vorhergehenden Ansprüche, **dadurch gekennzeichnet, dass** in einem Vorlauf (204) der zweiten Wärmetauscheranordnung (200) eine Fördereinrichtung (220) vorgesehen ist.

5. Speichertankeinrichtung nach einem der vorhergehenden Ansprüche, **dadurch gekennzeichnet, dass** das Gehäuse (12) zum Einbau ins Erdreich (50) vorgesehen ist, wobei vorzugsweise wenigstens zeitweise ein Wärmeaustausch zwischen dem Gehäuse (12) und dem Erdreich (50) zugelassen ist.

6. Speichertankeinrichtung nach einem der vorhergehenden Ansprüche, **gekennzeichnet durch** eine Ausgestaltung als mit wenigstens einer Wärmetauscheranordnung (100, 200, 300) vorkonfektionierter transportabler Speichertank (10).

7. Energiespeichersystem (500) mit einer Speichertankeinrichtung (600) nach einem der vorhergehenden Ansprüche, wobei eine erste Wärmetauscheranordnung (100) des Speichertanks (10) mit einem ersten Wärmeträgermedienkreislauf mit einer Wärmepumpeneinheit (60) und wenigstens eine zweite Wärmetauscheranordnung (200) des Speichertanks (10) mit einem zweiten Wärmeträgermedienkreislauf mit einer Wärmequelle (70) mit einem gasförmigen Wärmeträgermedium (202) gekoppelt ist, wobei wenigstens eine dritte Wärmetauscheranordnung (300) mit einem dritten Wärmeträgermedienkreislauf angeordnet ist, **dadurch gekennzeichnet,**
- dass die Wärmeträgermedienkreisläufe der Wärmetauscheranordnungen (100, 200, 300) strömungsmäßig voneinander entkoppelt sind;
- dass die erste Wärmetauscheranordnung (100) dazu vorgesehen ist, in einer Entzugsperiode Wärme aus dem Speichermedium (30) bis zur thermischen Entladung zu entziehen;
- die erste Wärmetauscheranordnung (100) zentral im Gehäuse (12) angeordnet ist und axial übereinander angeordnete Ebenen (110) mit spiralförmig angeordneten Wärmetauscherrohren (100W) umfasst;
- dass die zweite Wärmetauscheranordnung (200) und die dritte Wärmetauscheranordnung (300) zur Wärmezufuhr in das Speichermedium vorgesehen sind; und
- dass die zweite und/oder die dritte Wärmetauscheranordnung (200, 300) an oder nahe einer Innenseite (18) des Gehäuses (12) in spät oder gar nicht erstarrenden Zonen des Speichermediums (30) und/oder zumindest bereichsweise in einer Gehäusewand angeordnet sind.

8. Energiespeichersystem nach Anspruch 7, **dadurch gekennzeichnet, dass** wenigstens eines der ersten oder dritten Wärmeträgermedien (102, 302) flüssig ist.

9. Energiespeichersystem nach Anspruch 7 oder 8, **dadurch gekennzeichnet, dass** die dritte Wärmetauscheranordnung (300) mit einem zur Umgebung offenen Kollektor (80) gekoppelt ist.

10. Energiespeichersystem nach Anspruch 9, **dadurch gekennzeichnet, dass** der Kollektor (80) Leitungen (82a, 82b) mit ovalem Querschnitt aufweist.

11. Energiespeichersystem nach einem der Ansprüche 7 bis 10, **dadurch gekennzeichnet, dass** die zweite Wärmetauscheranordnung (200) mit einer Versorgungseinrichtung (70) und die dritte Wärmetauscheranordnung (300) mit einer Wärmequelle (80) gekoppelt sind.

12. Energiespeichersystem nach einem der Ansprüche 7 bis 11, **dadurch gekennzeichnet, dass** das zweite Wärmeträgermedium (202) Luft ist, insbesondere Umgebungsluft und/oder Abwasserkanalabluft und/oder Gebäudeabluft, besonders bevorzugt feuchtebeladene Luft.

13. Energiespeichersystem nach einem der Ansprüche 7 bis 12, **dadurch gekennzeichnet, dass** die zweite Wärmetauscheranordnung (200) mit einem Abwasserkanal (72) über eine Ringleitung (74) gekoppelt ist, wobei Abluft des Abwasserkanals (72) durch die zweite Wärmetauscheranordnung (200) führbar und in den Abwasserkanal (72) zurückleitbar ist.

14. Verfahren zum Betreiben eines Energiespeichersystems (500) nach einem der Ansprüche 7 bis 13, wobei das Energiespeichersystem (500) eine Speichertankeinrichtung (600) umfasst mit wenigstens einem Speichertank (10) mit einem Gehäuse (12), enthaltend ein Speichermedium (30) und wenigstens eine erste Wärmetauscheranordnung (100) in Kontakt mit dem Speichermedium (30), wobei das Speichermedium (30) einen Phasenübergang mit Latentwärme aufweist, wobei die wenigstens erste Wärmetauscheranordnung (100) ein erstes Wärmeträgermedium (102) aufweist und innerhalb des Gehäuses (12) eine zweite Wärmetauscheranordnung (200) mit einem zweiten Wärmeträgermedium (202) und wenigstens eine dritte Wärmetauscheranordnung (300) mit einem dritten Wärmeträgermedium (302) angeordnet ist,
wobei in einer Entzugsperiode Wärmeenergie über die erste Wärmetauscheranordnung (100) aus dem Speichertank (10) bis zur thermischen Entladung entnommen und Wärmeenergie über die zweite und/oder dritte Wärmetauscheranordnung (200, 300) zugeführt wird, wobei die zweite und/oder die dritte Wärmetauscheranordnung (200, 300) an oder nahe einer Innenseite (18) des Gehäuses (12) in spät oder gar nicht erstarrenden Zonen des Speichermediums (30) und/oder zumindest bereichsweise in einer Gehäusewand angeordnet sind, so dass zeitweise niederkalorische Wärme zugeführt wird, wobei die Effizienz der Speichertankeinrichtung mit Fortschreiten der Entzugsperiode und sinkender Temperatur des Speichermediums (30) ansteigt.

15. Verfahren nach Anspruch 14, **dadurch gekennzeichnet, dass** die zweite Wärmetauscheranordnung (200) mit einem gasförmigen Wärmeträgermedium (202) betrieben wird und die dritte Wärmetauscheranordnung (300) mit einem flüssigen Wärmeträgermedium (302) betrieben wird.

## Claims

1. Storage tank device (600) for an energy storage system (500), comprising at least one storage tank (10) with a housing (12), containing a storage medium (30) and at least one first heat exchanger arrangement (100) in contact with the storage medium (30), the storage medium (30) having phase transition with latent heat, the at least first heat exchanger arrangement (100) having a first heat transfer medium (102), and a second heat exchanger arrangement (200), with a second heat transfer medium (202), and at least one third heat exchanger arrangement (300), with a third heat transfer medium (302), being arranged inside the housing (12),
- the first heat exchanger arrangement (100) being provided for extracting heat, in an extraction period, out of the storage medium (30) up to thermal discharge;
- the second heat exchanger arrangement (200) and the third heat exchanger arrangement (300) being provided for feeding heat into the storage medium; and
- the first heat exchanger arrangement (100) being arranged centrally in the housing (12) and comprising levels (110) arranged axially one above the other and having spirally arranged heat exchanger tubes (100W), the second heat exchanger arrangement (200) and the third heat exchanger arrangement (300) surrounding the first heat exchanger arrangement (100), and the second heat exchanger arrangement (200) and/or the third heat exchanger arrangement (300) being arranged, at least in regions, at or near an inner face (18) of the housing (12) in zones of the storage medium (30) which solidify late or not at all and/or being arranged, at least in regions, in a housing wall.

2. Storage tank device according to Claim 1, **characterized in that** the second heat exchanger arrangement (200) is arranged, in regions, inside the first heat exchanger arrangement (100).

3. Storage tank device according to any one of the preceding claims, **characterized in that** the second heat transfer medium (202) is air, in particular ambient air and/or sewer exhaust air and/or building exhaust air, especially preferably moisture-laden air.

4. Storage tank device according to any one of the preceding claims, **characterized in that** a conveying device (220) is provided in an ingoing pipe (204) of the second heat exchanger arrangement (200).

5. Storage tank device according to any one of the preceding claims, **characterized in that** the housing (12) is intended to be installed in the ground (50), heat exchange between the housing (12) and the ground (50) being permitted preferably at least temporarily.

6. Storage tank device according to any one of the preceding claims, **characterized by** a configuration as a transportable storage tank (10) prefabricated with at least one heat exchanger arrangement (100, 200, 300).

7. Energy storage system (500) having a storage tank device (600) according to any one of the preceding claims, a first heat exchanger arrangement (100) of the storage tank (10) being coupled to a first heat transfer media circuit having a heat pump unit (60), and at least one second heat exchanger arrangement (200) of the storage tank (10) being coupled to a second heat transfer media circuit having a heat source (70) with a gaseous heat transfer medium (202), at least one third heat exchanger arrangement (300) with a third heat transfer media circuit being arranged, **characterized**
- in that the heat transfer media circuits of the heat exchanger arrangements (100, 200, 300) are decoupled from one another fluidically;
- in that the first heat exchanger arrangement (100) is provided for extracting heat, in an extraction period, out of the storage medium (30) up to thermal discharge;
- in that the first heat exchanger arrangement (100) is arranged centrally in the housing (12) and comprises levels (110) arranged axially one above the other and having spirally arranged heat exchanger tubes (100W);
- in that the second heat exchanger arrangement (200) and the third heat exchanger arrangement (300) are provided for feeding heat into the storage medium; and
- in that the second and/or the third heat exchanger arrangement (200, 300) are/is arranged at or near an inner face (18) of the housing (12) in zones of the storage medium (30) which solidify late or not at all and/or are/is arranged, at least in regions, in a housing wall.

8. Energy storage system according to Claim 7, **characterized in that** at least one of the first or third heat transfer media (102, 302) is liquid.

9. Energy storage system according to Claim 7 or 8, **characterized in that** the third heat exchanger arrangement (300) is coupled to a collector (80) open to the surroundings.

10. Energy storage system according to Claim 9, **characterized in that** the collector (80) has conduits (82a, 82b) of oval cross section.

11. Energy storage system according to one of Claims 7 to 10, **characterized in that** the second heat exchanger arrangement (200) is coupled to a supply device (70) and the third heat exchanger arrangement (300) is coupled to a heat source (80).

12. Energy storage system according to any one of Claims 7 to 11, **characterized in that** the second heat transfer medium (202) is air, in particular ambient air and/or sewer exhaust air and/or building exhaust air, especially preferably moisture-laden air.

13. Energy storage system according to any one of Claims 7 to 12, **characterized in that** the second heat exchanger arrangement (200) is coupled to a sewer (72) via a ring line (74), exhaust air from the sewer (72) being capable of being routed through the second heat exchanger arrangement (200) and of being returned to the sewer (72).

14. Method for operating an energy storage system (500) according to any one of Claims 7 to 13, the energy storage system (500) comprising a storage tank device (600) having at least one storage tank (10) with a housing (12), containing a storage medium (30) and at least one first heat exchanger arrangement (100) in contact with the storage medium (30), the storage medium (30) having phase transition with latent heat, the at least first heat exchanger arrangement (100) having a first heat transfer medium (102), and a second heat exchanger arrangement (200), with a second heat transfer medium (202), and at least one third heat exchanger arrangement (300), with a third heat transfer medium (302), being arranged inside the housing (12), in an extraction period heat energy being removed via the first heat exchanger arrangement (100) out of the storage tank (10) up to thermal discharge and heat energy being fed via the second and/or the third heat exchanger arrangement (200, 300), the second and/or the third heat exchanger arrangement (200, 300) being arranged at or near an inner face (18) of the housing (12) in zones of the storage medium (30) which solidify late or not at all and/or being arranged, at least in regions, in a housing wall, so that low-calorie heat is fed temporarily, the efficiency of the storage tank device increasing with the progress of the extraction period and with a falling temperature of the storage medium (30).

15. Method according to Claim 14, **characterized in that** the second heat exchanger arrangement (200) is operated with a gaseous heat transfer medium (202) and the third heat exchanger arrangement (300) is operated with a liquid heat transfer medium (302).

## Revendications

1. Ensemble réservoir de stockage (600) pour un système d'accumulation d'énergie (500), comportant au moins un réservoir de stockage (10) comprenant un boîtier (12), contenant un milieu accumulateur (30) et au moins un premier agencement d'échangeur de chaleur (100) en contact avec le milieu accumulateur (30), le milieu accumulateur (30) présentant une transition de phase avec chaleur latente, l'au moins un premier agencement d'échangeur de chaleur (100) comprenant un premier milieu caloporteur (102), et un deuxième agencement d'échangeur de chaleur (200) comprenant un deuxième milieu caloporteur (202) et au moins un troisième agencement d'échangeur de chaleur (300) comprenant un troisième milieu caloporteur (302) étant disposés à l'intérieur du boîtier (12),
- le premier agencement d'échangeur de chaleur (100) étant prévu pour, pendant une période d'extraction, extraire de la chaleur du milieu accumulateur (30) jusqu'à décharge thermique ;
- le deuxième agencement d'échangeur de chaleur (200) et le troisième agencement d'échangeur de chaleur (300) étant prévus pour l'apport de chaleur dans le milieu accumulateur ; et
- le premier agencement d'échangeur de chaleur (100) étant disposé centralement dans le boîtier (12) et comportant des plans (110) superposés axialement comprenant des tubes d'échangeur de chaleur (100W) disposés en forme de spirale, le deuxième agencement d'échangeur de chaleur (200) et le troisième agencement d'échangeur de chaleur (300) entourant le premier agencement d'échangeur de chaleur (100) et le deuxième agencement d'échangeur de chaleur (200) et/ou le troisième agencement d'échangeur de chaleur (300) étant disposés, au moins dans certaines régions, au niveau ou à proximité d'un côté intérieur (18) du boîtier (12) dans des zones du milieu accumulateur (30) se solidifiant tard ou pas du tout et/ou, au moins dans certaines régions, dans une paroi de boîtier.

2. Ensemble réservoir de stockage selon la revendication 1, **caractérisé en ce que** le deuxième agencement d'échangeur de chaleur (200) est disposé, dans certaines régions, à l'intérieur du premier agencement d'échangeur de chaleur (100).

3. Ensemble réservoir de stockage selon l'une quelconque des revendications précédentes, **caractérisé en ce que** le deuxième milieu caloporteur (202) est de l'air, en particulier de l'air ambiant et/ou de l'air d'évacuation de canal d'eaux usées et/ou de l'air d'évacuation de bâtiment, de manière particulièrement préférée de l'air chargé d'humidité.

4. Ensemble réservoir de stockage selon l'une quelconque des revendications précédentes, **caractérisé en ce qu'**un dispositif de transport (220) est prévu dans une conduite d'alimentation (204) du deuxième agencement d'échangeur de chaleur (200).

5. Ensemble réservoir de stockage selon l'une quelconque des revendications précédentes, **caractérisé en ce que** le boîtier (12) est prévu pour l'installation dans le sol (50), un échange de chaleur entre le boîtier (12) et le sol (50) étant autorisé de préférence au moins temporairement.

6. Ensemble réservoir de stockage selon l'une quelconque des revendications précédentes, **caractérisé par** une configuration en tant que réservoir de stockage (10) transportable préfabriqué avec au moins un agencement d'échangeur de chaleur (100, 200, 300).

7. Système d'accumulation d'énergie (500) comprenant un ensemble réservoir de stockage (600) selon l'une quelconque des revendications précédentes, un premier agencement d'échangeur de chaleur (100) du réservoir de stockage (10) étant accouplé à un premier circuit de milieux caloporteurs comprenant une unité de pompe à chaleur (60) et au moins un deuxième agencement d'échangeur de chaleur (200) du réservoir de stockage (10) étant accouplé à un deuxième circuit de milieux caloporteurs comprenant une source de chaleur (70) avec un milieu caloporteur gazeux (202), au moins un troisième agencement d'échangeur de chaleur (300) comprenant un troisième circuit de milieux caloporteurs étant prévu, caractérisé
- en ce que les circuits de milieux caloporteurs des agencements d'échangeur de chaleur (100, 200, 300) sont désaccouplés les uns des autres du point de vue fluidique ;
- en ce que le premier agencement d'échangeur de chaleur (100) est prévu pour, pendant une période d'extraction, extraire de la chaleur du milieu accumulateur (30) jusqu'à décharge thermique ;
- en ce que le premier agencement d'échangeur de chaleur (100) est disposé centralement dans le boîtier (12) et comporte des plans (110) superposés axialement comprenant des tubes d'échangeur de chaleur (100W) disposés en forme de spirale ;
- en ce que le deuxième agencement d'échangeur de chaleur (200) et le troisième agencement d'échangeur de chaleur (300) sont prévus pour l'apport de chaleur dans le milieu accumulateur ; et
- en ce que le deuxième et/ou le troisième agencement d'échangeur de chaleur (200, 300) sont disposés au niveau ou à proximité d'un côté intérieur (18) du boîtier (12) dans des zones du milieu accumulateur (30) se solidifiant tard ou pas du tout et/ou, au moins dans certaines régions, dans une paroi de boîtier.

8. Système d'accumulation d'énergie selon la revendication 7, **caractérisé en ce qu'**au moins l'un des premier et troisième milieux caloporteurs (102, 302) est liquide.

9. Système d'accumulation d'énergie selon la revendication 7 ou 8, **caractérisé en ce que** le troisième agencement d'échangeur de chaleur (300) est accouplé à un collecteur (80) ouvert sur l'environnement.

10. Système d'accumulation d'énergie selon la revendication 9, **caractérisé en ce que** le collecteur (80) comprend des conduites (82a, 82b) de section transversale ovale.

11. Système d'accumulation d'énergie selon l'une quelconque des revendications 7 à 10, **caractérisé en ce que** le deuxième agencement d'échangeur de chaleur (200) est accouplé à un dispositif d'alimentation (70) et le troisième agencement d'échangeur de chaleur (300) est accouplé à une source de chaleur (80).

12. Système d'accumulation d'énergie selon l'une quelconque des revendications 7 à 11, **caractérisé en ce que** le deuxième milieu caloporteur (202) est de l'air, en particulier de l'air ambiant et/ou de l'air d'évacuation de canal d'eaux usées et/ou de l'air d'évacuation de bâtiment, de manière particulièrement préférée de l'air chargé d'humidité.

13. Système d'accumulation d'énergie selon l'une quelconque des revendications 7 à 12, **caractérisé en ce que** le deuxième agencement d'échangeur de chaleur (200) est accouplé à un canal d'eaux usées (72) par le biais d'une conduite annulaire (74), de l'air d'évacuation du canal d'eaux usées (72) pouvant être guidé à travers le deuxième agencement d'échangeur de chaleur (200) et pouvant être renvoyé dans le canal d'eaux usées (72).

14. Procédé de fonctionnement d'un système d'accumulation d'énergie (500) selon l'une quelconque des revendications 7 à 13, le système d'accumulation d'énergie (500) comportant un ensemble réservoir de stockage (600) comprenant au moins un réservoir de stockage (10) comprenant un boîtier (12), contenant un milieu accumulateur (30) et au moins un premier agencement d'échangeur de chaleur (100) en contact avec le milieu accumulateur (30), le milieu accumulateur (30) présentant une transition de phase avec chaleur latente, l'au moins un premier agencement d'échangeur de chaleur (100) comprenant un premier milieu caloporteur (102), et un deuxième agencement d'échangeur de chaleur (200) comprenant un deuxième milieu caloporteur (202) et au moins un troisième agencement d'échangeur de chaleur (300) comprenant un troisième milieu caloporteur (302) étant disposés à l'intérieur du boîtier (12),
pendant une période d'extraction, de l'énergie thermique étant extraite du réservoir de stockage (10) par le biais du premier agencement d'échangeur de chaleur (100) jusqu'à décharge thermique et de l'énergie thermique étant acheminée par le biais du deuxième et/ou du troisième agencement d'échangeur de chaleur (200, 300), le deuxième et/ou le troisième agencement d'échangeur de chaleur (200, 300) étant disposés au niveau ou à proximité d'un côté intérieur (18) du boîtier (12) dans des zones du milieu accumulateur (30) se solidifiant tard ou pas du tout et/ou, au moins dans certaines régions, dans une paroi de boîtier, de telle sorte que de la chaleur à faible pouvoir calorifique soit acheminée temporairement, l'efficacité de l'ensemble réservoir de stockage augmentant lorsque la période d'extraction se déroule et que la température du milieu accumulateur (30) diminue.

15. Procédé selon la revendication 14, **caractérisé en ce que** le deuxième agencement d'échangeur de chaleur (200) fonctionne avec un milieu caloporteur gazeux (202) et le troisième agencement d'échangeur de chaleur (300) fonctionne avec un milieu caloporteur liquide (302).
